# EUROPEAN PATENT SPECIFICATION

(11) **EP 1 785 696 B1**
(45) Date of publication and mention of the grant of the patent: **05.10.2011**
(21) Application number: 05024414.4
(22) Date of filing: 09.11.2005
(51) Int. Cl.: G01C 21/32, G08G 1/0969

(54) **Optimum route determination with tilings**
Bestimmung einer optimalen Route mit Karten-Kacheln
Détermination d'un itinéraire optimale avec des pavés de carte

(43) Date of publication of application: 16.05.2007
(73) Proprietor: Harman Becker Automotive Systems GmbH, 76307 Karlsbad (DE)
(72) Inventor: Wellmann, Harald, 20259 Hamburg (DE)
(74) Representative: Bertsch, Florian Oliver

(56) References cited:
- EP-A- 1 473 543
- US-A- 6 016 485
- US-B1- 6 308 177

## Description

### BACKGROUND OF THE INVENTION

This invention relates to optimum route determination. In particular, this invention relates to a method and corresponding system for pre-processing road segment data, a method and corresponding system for determining an optimum route based on pre-processed road segment data, and a navigation system.

Finding an optimum route from a given start point to a given destination is one of the key functions of car navigation systems or other systems providing optimum route information.

While several algorithms are known for solving the problem of finding an optimum route, it is often not feasible to apply these algorithms directly to a road network such as the one of a European country or the US because of the large number of road segments and road segment vertices in these road networks. The number of vertices may well be of the order or in excess of one million. Because of memory and runtime restrictions in a car navigation system, it is therefore not feasible to directly employ standard shortest path algorithms to long-distance optimum route search.

Frequently, the fact that road networks have a natural hierarchical structure expressed by road classes, such as "Autobahn", "Bundesstraße", and "Kreisstraße" in Germany, or "Motorway", "A road", and "B road" in the UK is harnessed to reduce the complexity of optimum route search. The determination of an optimum route is broken down into several subtasks, namely the tasks of finding two short-distance routes from the start point to, e.g., a motorway junction or a junction of another road allowing fast long-distance travel, and from the destination to, e.g., another motorway junction or a junction of another road allowing fast long-distance travel, respectively, and the task of finding an optimum route between these two motorway junctions using motorways or other roads allowing fast long-distance travel only.

A hierarchical structure of the road network is also reflected by maps having the standardized GDF (Geographic Data File) format, wherein all road segments have an attribute called Functional Road Class (FRC) which defines a hierarchy of roads and is intended to distinguish roads of local importance from those of national or international importance.

Document EP 0 323 485 B1 discloses a process for determining an itinerary between a starting point and a destination point, wherein the road network is divided into and stored on at least two levels, with all roads which can be travelled along being contained within the lower level and the roads which connect different regions of the lower level road network being contained in the higher level. Typically, the higher level will contain roads such as motorways which allow fast long-distance travel.

However, it should be noted that, because the hierarchical structure of road segments is assigned by a human expert, the determined route may not be truly optimum. Furthermore, it may not be sufficient to rely on standard road hierarchies such as the FRC which target fastest routes and, therefore, may be inappropriate for computing shortest routes or other routing options. Values quantifying road importance which are assigned by human experts may therefore be insufficient. Rather, a method for determining a road segment attribute from map geometry is desirable.

EP 1 473 543 A2, which serves as basis for the preamble of the independent claims, relates to a method and system for forming, updating and using a geographic database. Spatial parcels are formed to organize the data, so as to group data entities into parcels. Different levels of data are implemented by associating a rank with a road segment, the rank corresponding to a functional class, such as freeways, side streets etc.

US 6,308,177 B1 discloses a system and method for use in the storage of geographic data which also employs a parcelization of data. A segment of the data has a rank attribute that specifies a highest routing layer in which the segment appears. US 6,016,485 discloses a system for pathfinding, in which a network is divided into a set of tiles.

Document WO 03/079155 discloses a method for determining a desirable path from a source node to a destination node, wherein a preliminary routing data set including indicia of a reach metric associated with each node of a road network is provided. The reach metric for a given node represents the potential of the given node to be part of a desirable path between any permissible other nodes of the road network.

However, there still is a need for providing a method for determining optimum routes based on road segment attributes which are determined based on map geometry. In particular, there is the need for a method for determining optimum routes wherein such road segment attributes may be determined efficiently, even for large road networks.

### SUMMARY OF THE INVENTION

According to the present invention, this need is addressed by a method for pre-processing graph data according to claim 1, a method for determining optimum routes according to claim 17, a system for pre-processing graph data according to claim 26, a system for optimum route determination according to claim 35, and a navigation system according to claim 41. The dependent claims define preferred or advantageous embodiments of the invention.

While embodiments of the invention will be described in terms of a road network comprising road segments bellow, the embodiments are not limited thereto. Rather, the methods may be carried out on an arbitrary graph containing a plurality of edges.

According to an embodiment of the invention, a method for pre-processing road segment data comprises the steps of providing the road segment data, defining a tiling covering an area wherein the road segments are contained, and determining a rank information for a road segment, such that the rank information quantifies the relevance of the road segment for optimum routes connecting tiles of the tiling. The method for pre-processing road segment data will be performed in advance of an optimum route determination and expedites the latter if road segment rank information is provided. The method for pre-processing road segment data could, in principle, also be performed in a car navigation system as part of an optimum route determination. Preferably, the method for pre-processing road segment data is performed automatically. The step of defining the tiling allows the rank information to be determined efficiently.

The rank information may quantify the relevance of a road segment for optimum routes connecting points located on tile edges, making it possible to determine the rank information more efficiently and quickly by reducing the total number of potential start points and destinations to be considered.

The tiles or road segments are defined such that each road segment is contained in at most one tile of the tiling, i.e., that, for each road segment, there is only one tile such that the road segment, with the exception of its vertices, is contained within the inside of the tile. Such a definition of the tiling makes it possible to uniquely assign each road segment to one tile and, therefore, determine the rank information based on the tiling. The definition of the tiling could then also be provided in terms of an additional attribute for each road segment specifying the tile the road segment is contained in. Defining a tiling such that each road segment is contained in at most one tile of the tiling only may be achieved by introducing auxiliary vertices at intersections of original road segments and tile edges. Therefore, defining the tiling accordingly may also include the step of redefining road segments.

The step of determining the rank information for a road segment comprises the steps of determining a tile containing the road segment, selecting a first tile having at least a given tile distance from the tile containing the road segment, and determining whether the road segment is contained in an optimum route having a start road segment located in the first tile, i.e., a start road segment vertex located inside of or on the edge of the first tile. According to these steps, the rank information is determined as a measure for the relevance of the road segment for optimum routes having a start road segment located in a tile having at least the given tile distance from the road segment. The determination of optimum routes may be restricted to routes having a start point located on an edge of said first tile. By restricting the number of possible start points, the determination of the rank information can be carried out more efficiently.

The step of determining the rank information may further comprise the step of selecting a second tile having at least the given tile distance from the tile containing the road segment for which the rank information is to be determined, wherein a destination road segment of the optimum path is located in the second tile. Then, the rank information is a measure for the relevance of the road segment for optimum routes with both start and destination road segments located in tiles having at least the given tile distance from the road segment for which the rank information is to be determined. Preferably, the possible destination road segments are restricted to destination road segments having a vertex located on an edge of the second tile. By restricting the number of possible destinations, the determination of the rank information can be carried out still more efficiently.

Determining the rank information may further include the steps of selecting all possible first tiles and second tiles having the given tile distance from the tile containing the road segment for which the rank information is to be determined and determining whether the road segment is contained in an optimum route connecting a start road segment in one of the first tiles and a destination road segment in one of the second tiles. Again, the optimum route search may be restricted to start points located on an edge of the first tile and destination located on an edge of the second tile, respectively. This method of determining the rank information allows one to determine whether the road segment is contained in any optimum path meeting the specified requirements, thus providing a general road segment attribute.

The step of determining the rank information may also comprise the step of determining a maximum of the given tile distance for which the road segment is contained in an optimum route as described above. Then, the rank information quantifies the longest optimum route still containing the road segment and, therefore, the length of long-distance routes for which the road segment is still important. Further, because the rank information is determined based on the tiling, it may be determined efficiently.

The step of determining the rank information is preferably performed sequentially for increasing values of the given tile distance, such that the more complex steps of determining a rank information for larger values of the given tile distance can be performed based on results obtained in the preceding steps for smaller values of the given tile distance. In particular, the optimum route search required for determining the rank information may be performed on a subset of road segments, with the subset being selected based on the results obtained for smaller values of the given tile distance. Then, it is feasible to reduce the complexity of rank information determination by eliminating road segments in dependence on previously obtained results, thus facilitating rank information determination at subsequent stages.

During later stages of rank information determination, the tile size may or may not be increased with increasing values of the given tile distance. In an advantageous embodiment, the tiling is coarsened after the rank information has been determined for several sequential rank values, while the road network is redefined simultaneously. For regular tilings, the coarsening may consist in increasing tile edge lengths. The redefinition of the road network may consist in defining a new road network as the subset of road segments having the maximum rank information determined so far. These steps may be iterated, such that a hierarchy of coarsened tilings and an associated hierarchy of rank values is created. In preferred embodiments, the tile edge length of a square tiling is doubled and the road network is redefined after determining the rank information for three or four successively increasing rank values. In these embodiments, the road network then is redefined as the set of road segments having a rank information of at least three or four as determined for the preceding level of the coarsening hierarchy.

The method for pre-processing road segment data may further comprise the step of providing road segment weighting factors, which are taken into account during the step of determining the rank information. Such weighting factors allow additional road segment attributes to be taken into account. Possible weighting factors quantify road segment length, road segment traversal time, or road segment length in combination with a characteristic road segment travel speed. The weighting factors may also depend on whether a road segment includes a tunnel or a ferry portion. The weighting factors may also depend on the travel direction on a road segment. Additionally or alternatively, weighting factors may be provided which are associated with road segment vertices. In this case, the vertex weighting factors are taken into account, either additionally or alternatively to road segment weighting factors, for computing a cost function associated with a given route. By providing weighting factors associated with road segment vertices, e.g., the time associated with a change of driving direction at a road segment vertex may be taken into account. The weighting factors therefore allow a determination of optimum routes or pre-processing of road segment data for subsequent use in optimum route determination for various travel preferences.

Preferably, the step of determining the rank information is performed for each road segment. Then, the rank information may be provided for each road segment in a subsequent optimum route determination, thus making it possible to determine the relevance of all road segments for a specific optimum route determination.

If the step of determining the rank information includes optimum route searches, such as described in several of the embodiments mentioned above, this optimum route search may be performed using Dijkstra's algorithm or an A* algorithm or any other optimum path algorithm known from graph theory, thus allowing an efficient determination of the rank information.

The step of defining a tiling may comprise a step of providing edge or vertex data for each tile. Alternatively, a method for determining the tiling may be specified, e.g., by specifying a tile shape and size and a first tile position. This flexibility in defining the tiling allows one to choose a method for tiling definition which is most convenient in terms of storage or runtime requirements.

A tile size may vary throughout the tiling. The tile size may be chosen in dependence on the road segment density or the road vertex density in a region of the area, in which the road segments are contained. Then, the number of road segments or vertices within one tile may be comparable for different tiles, resulting in comparable computational complexities.

The tiles may be chosen to be polygon-shaped. In particular, the tiles may be rectangular in shape. Preferably, the tiles are chosen to be square-shaped. In this case, it is particularly simple to determine which tile a given road segment or road vertex is contained in.

In order to define a tile distance for the step of determining the rank information, various definitions may be employed. Preferably, the tile distance between two tiles is defined as the minimum number of tile edges or tile vertices traversed on a path connecting the two tiles, such that the tile distance is an integer number which is convenient for further processing. Alternatively, the tile distance may be defined as distance between tile centres or tile corners, or any other metric.

The method for pre-processing road segment data may further comprise a step of intercombining a sequence of road segments contained in one tile into a new road segment. If weighting factors are provided for road segments and/or road segment vertices, this step is typically accompanied by the step of intercombining the weighting factors into a new weighting factor. The intercombination of road segments into new, longer road segments allows the computational complexity of subsequent optimum route searches to be reduced.

If rank values are determined recursively for increasing rank values, the step of intercombining road segment sequences into new road segments may also be performed at intermediate stages, thus further reducing the computational complexity in subsequent steps. Similarly, if rank information is determined based on a hierarchy of coarsened tilings as described above, the step of intercombining road segments may be performed when the road network is redefined.

If rank values are determined recursively for increasing rank values, the method for pre-processing road segment data preferably comprises a step of coarsening the tiling after a predetermined road segment rank information has been determined. This allows the total number of tiles to be reduced, thus further facilitating an efficient determination of the rank information.

While the method for data preprocessing has been described in terms of a road network comprising road segments, it is not limited thereto. Rather, the method according to any one embodiment described above may be carried out on an arbitrary graph containing a plurality of edges. The graph may be directed or undirected. Additional examples for graphs to which the present invention may be applied include power lines of an electrical network or data lines of a communication or data network.

Preferably, the method for pre-processing road segment data comprises the step of outputting the determined rank information for subsequent use in optimum route determination. The step of outputting rank information data preferably also includes a step of storing road segment data, with the road segment data being arranged according to rank information corresponding to the road segment and/or the tile containing the road segment. If the tile size is varied during rank information determination, the road segment data may further be arranged according to tile size in addition to rank value and/or corresponding tile. The output road segment data includes the determined rank information as road segment attribute. Further preferably, an additional data set is provided containing information on the position of road segment data corresponding to a tile in the file or database containing the output road segment data.

According to an embodiment of the invention, a method for determining an optimum route from a start point to a destination comprises the steps of providing road segment data, providing rank information data determined according to the method for pre-processing road segment data of the invention, and determining an optimum path from the start point to the destination based on the road segment data and the rank information data. By providing rank information data, the optimum route determination can be performed more efficiently or faster. Rank information is preferably provided for all road segments. Alternatively, rank information may be provided only for a subset of road segments. The rank information may be incorporated into the road segment data as additional road segment attribute, or may be provided separately.

In a preferred embodiment, the method for optimum route determination comprises the step of selecting a subset of road segments based on the rank information, with the step of determining an optimum route being performed based on this subset of road segments. By selecting a subset of road segments, the computational complexity of optimum route search is reduced.

Preferably, the method for optimum route determination comprises the step of defining a tiling covering an area wherein the road segments are contained. Further preferably, the tiling or road segments is/are defined such that each one of the road segments is contained within at most one tile of said tiling. Still further preferably, the tiling is identical to the one employed for determining road segment rank information. By defining the tiling, optimum route determination is further simplified. In a preferred embodiment, the tiling employed for determining an optimum route is identical to the one employed for data pre-processing. Similarly, in a preferred embodiment, if a hierarchy of coarsened tilings has been employed for data pre-processing, the same hierarchy of coarsened tilings is employed for determining an optimum route. According to these preferred embodiments, it is possible to determine an exact optimum route rather than an approximately optimum route only.

The step of selecting a subset of road segments may then comprise the steps of determining a start tile containing the start point, determining a destination tile containing the destination, and including a road segment into said subset of road segments based on a road segment rank information and a tile distance of the tile containing the road segment from the start tile or destination tile. Then, the selection of road segments to be incorporated into the subset of road segments may reflect the fact that rank information quantifies the relevance of a road segment for long-distance optimum routes for the tiling. An exact determination of optimum routes is therefore possible.

In particular, in a preferred embodiment, the step of selecting a subset of road segments comprises the steps of determining a start-destination tile distance from a start tile containing the start point to a destination tile containing the destination, choosing a minimum rank value based on the start-destination tile distance, and including all road segments having a rank value equal to or greater than the minimum rank value into the subset of road segments. More specifically, the minimum rank value may be chosen to be equal to or less than the floor of the start-destination tile distance divided by two, plus 1. Therefore, for a large start-destination tile distance, the minimum rank value can be chosen to be large, such that the number of road segments contained in the subset may be substantially smaller than the total number of road segments.

According to a preferred embodiment, the step of selecting a subset of road segments further comprises the steps of determining a tile having a distance equal to or less than the minimum rank value minus 1 from the start tile or the destination tile, retrieving a rank information for a road segment contained in this tile, and including the road segment into the subset of road segments if its rank value is equal to or greater than the smaller one of the tile distances of the tile from the start tile and from the destination tile, respectively.

For the step of determining an optimum route based on a subset of road segments, road segment weighting factors and/or road segment vertex weighting factors may be provided, e.g., as road segment attributes. Preferably, the road segment weighting factors and/or road segment vertex weighting factors are identical to the ones provided for road segment data pre-processing. Similarly to the pre-processing phase, the weighting factors allow a determination of optimum routes based on different travel preferences. Again, the weighting factors may be dependent on a road segment traversal direction. In a preferred embodiment, the road segment weighting factors and/or road segment vertex weighting factors are identical to the ones employed during road segment data pre-processing, in order to allow an exact optimum route to be determined.

The step of determining an optimum route may be performed using Dijkstra's algorithm or an A* algorithm or any other optimum path algorithm known from graph theory, thus allowing an efficient determination of an optimum route. If an A* algorithm is employed, an estimate for a lower bound of an optimum route cost is given by an air distance for distance-based route searches and by an air distance divided by a characteristic travel velocity for time-based route searches.

The method for optimum route determination may further comprise the steps of receiving vehicle position data and determining an optimum route from the vehicle position to the destination. According to this method, a driver may be guided to his/her destination even if he/she is unable to explicitly determine his/her current position.

While the method for optimum route determination has been described in terms of a road network comprising road segments, again, this method is not limited thereto. Rather, the method according to any one aspect or embodiment described above may be carried out on an arbitrary graph containing a plurality of edges.

A system for pre-processing road segment data according to an embodiment of the invention comprises a first storage unit containing road segment data, a second storage unit containing tiling definition data, a working memory unit for storing a subset of the road segment data, and a processing unit adapted to process data stored in the working memory unit for determining a rank information of a road segment based on the tiling, wherein the rank information quantifies the importance of a road segment for optimum routes connecting tiles of the tiling. The first and second storage unit may be separate devices or a single device. The tiling definition data may also be provided in the form of a mathematical function which allows one to determine the tile containing a specific point.

Preferably, the system is adapted to perform the method for pre-processing road segment data according to an embodiment of the invention. Further preferably, the working memory unit is adapted to also store a subset of tiling definition data. This system is adapted to determine the road segment rank information based on the tiling.

Preferably, the system for pre-processing road segment data further comprises an additional working memory unit coupled to the processing unit and adapted to store the determined rank information. Rank information stored in the additional working memory unit may either be output into a storage unit, or may be used in subsequent steps. The latter function of the additional working memory unit is particularly important if the rank information is determined according to a recursive method, starting from road segments important only for short-distance travel to road segments relevant also for long-distance travel. The additional working memory unit may be identical to or different from the working memory unit, i.e., the working memory unit and additional working memory unit may be separate devices or a single device.

The processing unit may be adapted to process data stored in the additional working memory unit for determining the rank information. Again, this is particularly useful if the rank information is determined sequentially for increasing rank values.

Preferably, the working memory unit has sufficient storage capacity to store a subset of road segment data required for an optimum route determination during the step of determining the rank information. In particular, the working memory unit preferably has a sufficient storage capacity to store road segment data of one tile or of an appropriately chosen subset of road segments required for determining the rank information for at least one given road segment, for a characteristic tiling and a characteristic road segment density. If the working memory unit is so designed, the processing unit needs to access the storage units less frequently, and the runtime required for rank information determination is reduced.

Preferably, the system for pre-processing road segment data further comprises an output unit for outputting the determined rank information, making the determined rank information accessible to subsequent usage in optimum route determination, e.g., in a navigation system. The output unit may be designed to output the rank information to a removable storage medium, e.g., a C.D-R/W, or a storage medium incorporated into the system for pre-processing road segment data. I.e., the system may comprise a third storage unit for storing the determined rank information. This storage unit may then be adapted to also be accessed by the processing unit for determining additional rank information.

Preferably, the system for pre-processing road segment data comprises a plurality of processing units which are adapted to determine road segment rank information in parallel. Since the computation of road segment rank information, at least for road segments contained in a given tile, is a local task in the sense that it requires information relating to other road segments in a specific neighbourhood of this tile only, such a parallelization of rank information determination is useful in terms of run-time requirements. Further, the method for road segment data pre-processing according to the invention is well adapted for parallelization. Various parallelization schemes may be realized using computer clusters or grids, e.g., peer-to-peer or master-worker schemes. In the latter case, the system for pre-processing road segment data comprises a master system and at least one worker system, wherein the master system is adapted to perform an iteration over tiles and to pass information to the worker system, and wherein the at least one worker system is adapted to determine the rank information of a road segment contained in a tile selected by the master system. If rank information is to be determined using a recursive method, the master system is further adapted to perform an iteration over increasing tile neighbourhood sizes. In a preferred embodiment, the master system breaks down the problem into small jobs which are delegated to a plurality of worker systems. Specifically, upon receiving at least a tile information from the master system, a worker system determines the rank information of road segments contained in this tile based on road segment data and, possibly, rank information data obtained in preceding steps for road segments contained in a local neighbourhood of the tile. The master system and worker systems may operate on a common copy of the road segment data and rank information data, or the worker systems may use local copies of the data, returning a result to the master system. In an embodiment wherein the system for pre-processing road segment data comprises a master system and at least one worker system, the pre-processing is expedited by parallel data processing.

A system for optimum route determination according to an embodiment of the invention comprises a first storage unit containing road segment data, a second storage unit containing rank information data determined according to the method for pre-processing road segment data according to the invention, a working memory unit for storing a subset of said road segment data, and a processing unit coupled to the working memory unit and adapted to determine an optimum route from a start point to a destination based on the rank information data. The first and second storage units may be separate devices or a single device. In a preferred embodiment, the road segment data and rank information data are stored in a common storage unit. Preferably, the system is adapted to perform the method for optimum route determination according to the invention. Such a system is adapted to efficiently perform an optimum route determination based on the rank information.

The system for optimum route determination may further comprise an input means for inputting a desired destination and, possibly, start point of the route, the input means being coupled to the processing unit and the working memory unit such that the destination and start point data can be stored in the working memory unit.

In a preferred embodiment, the system for optimum route determination further comprises an additional processing unit adapted to include road segment data or rank information data into the data stored in the working memory unit or remove it therefrom based on rank information data. The additional processing unit may be identical to the processing unit or may be a separate device. By providing the additional processing unit, it is possible to load a subset of road segment data into the working memory, the subset containing road segments potentially relevant for the optimum route to be determined. The additional processing unit may further be adapted to access the destination and start point information stored in the working memory unit, and include or remove data into or from the data stored in the working memory, respectively, in dependence on the destination and start point information. The processing unit and additional processing unit may be separate devices or a single device.

Preferably, the system for optimum route determination comprises a third storage unit containing tiling definition data. The tiling definition data may also be stored as an attribute for road segments specifying the tile a road segment belongs to. The third storage unit is accessible by the processing unit or the additional processing unit. Preferably, the additional processing unit is adapted to include or remove data into or from the data stored in the working memory unit, respectively, in dependence on both rank information and tiling definition data. This allows a subset of road segments on which an optimum route search is to be performed to be selected based on both tiling and rank information data. The first, second, and third storage units may be all distinct devices, two of the storage units may be a single device, or all of these storage units may be a single device. In an advantageous embodiment with a regular tiling or a hierarchy of regular tilings, tiling definition data may again be provided in the form of a mathematical function which allows one to determine a tile containing a specific point based on its coordinates.

In a preferred embodiment, the working memory unit has sufficient storage capacity to store a subset of road segment data required for optimum route search, at least for characteristic tile size and road segment density. Then, an optimum route can be determined with the processing unit accessing the working memory unit only, thus reducing runtimes.

A navigation system according to the invention comprises a system for optimum route determination according to the invention. The navigation system may further comprise all components known from conventional navigation systems, such as input and output units, a display, loudspeakers, etc. In particular, the navigation system may comprise a position determining means adapted to provide vehicle position information to said system for optimum route determination. This allows optimum route determination from the current vehicle position to a destination without the driver explicitly providing a start point information.

It should be noted that, although the term "road segments" will be used throughout this document, the objects denoted as road segments are not necessarily physical roads, but may also be, e.g., routes traversed by a ferry crossing a river or lake.

In addition, the methods and systems described in the context of road segments may also be applied to any other sort of objects forming a network for which an optimum route search may be of interest. Examples include data connections in a computer network or power transmission lines. While the present invention will be described in terms of optimum routes in a road network, all such applications are understood to be also encompassed.

It should also be noted that, although the term "optimum route" is used throughout, the methods and systems according to various embodiments of the invention are also adapted to determine advantageous routes which are not optimum in a mathematical sense but, e.g., approximately optimum routes. All such variants are also contemplated by the present invention. However, according to the preferred embodiments of the present invention, a method and system for road segment data pre-processing and corresponding method and system for optimum route determination are provided which allow an exact optimum route to be determined. According to these preferred embodiments, the complexity of optimum route determination is such that it may be carried out, e.g., in a navigation system aboard a vehicle.

The main field of application of the present invention will be the determination of optimum routes in a road network.

### BRIEF DESCRIPTION OF THE DRAWINGS

Additional features and advantages of the present invention will become more readily appreciated from the following detailed description of preferred or advantageous embodiments with reference to the accompanying drawings, wherein:
Fig. 1 shows a schematic block diagram of a system for pre-processing road segment data according to an embodiment of the invention;
Fig. 2 shows a schematic illustration of a set of road segments;
Figs. 3 A - C show flow charts representing a method for determining a rank information according to an embodiment of the invention;
Fig. 4 shows a flow chart representing a subroutine of a method for pre-processing road segment data according to another embodiment of the invention;
Fig. 5 shows a flow chart representing a method for determining the rank information according to another embodiment of the invention;
Fig. 6 shows a flow chart representing a method for determining the rank information according to yet another embodiment of the invention;
Fig. 7 shows a tiling and schematically illustrates a definition of tile distance according to an embodiment of the invention;
Fig. 8 shows a tiling and road segments, and schematically illustrates a step of determining the rank information according to an embodiment of the invention;
Figs. 9 A and B schematically illustrate recursive steps of a method for pre-processing road segment data according to an embodiment of the invention;
Fig. 10 shows a schematic block diagram of a navigation system according to an embodiment of the invention;
Fig. 11 shows a schematic block diagram of a system for optimum route determination according to an embodiment of the invention;
Figs. 12 A and B schematically illustrate a step of selecting a subset of road segments for optimum route determination according to an embodiment of the invention; and
Figs. 13 A and B show flow charts representing a method for optimum route determination and a step of selecting a subset of road segments thereof according to an embodiment of the invention, respectively.

### DESCRIPTION OF PREFERRED EMBODIMENTS

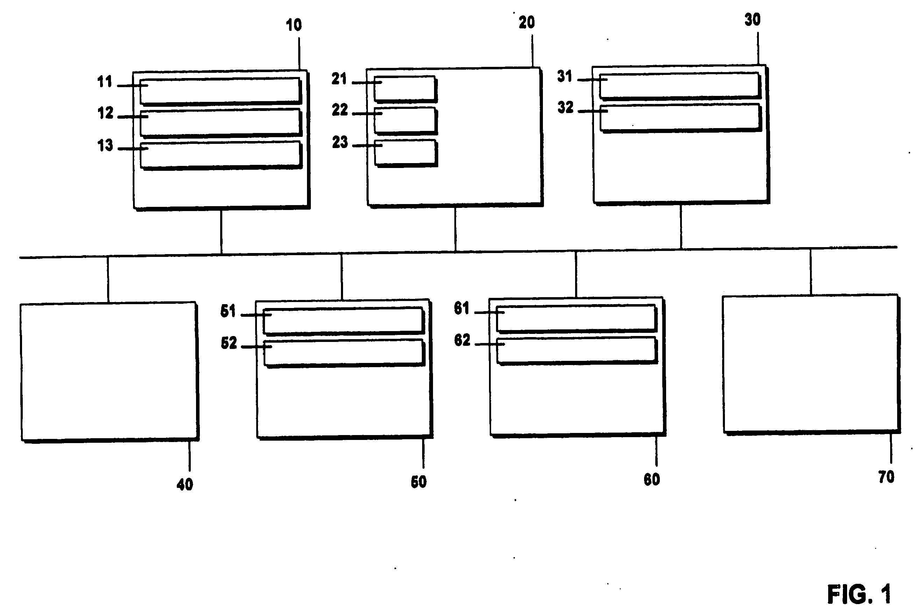

With reference to Fig. 1, a system 1 for pre-processing road segment data according to an embodiment of the invention will be described. The system is adapted to determine or, more specifically, compute the rank information for each one of a set of road segments, with the rank information quantifying the relevance of a road segment for long-distance travel. More specifically, according to the embodiment, a tiling is provided for an area wherein the road segments are contained, with the rank information quantifying the relevance of a road segment for optimum routes connecting different tiles of the tiling.

The system 1 comprises a first storage unit 10 for storing road segment data, a second storage unit 20 for storing tiling definition data, and a third storage unit 30 for storing a determined rank information. The first, second, and third storage units may be different physical entities, as illustrated in Fig. 1, but may also be combined into one physical storage unit, such as a CD-ROM or CD-R/W or a computer hard drive.

Road segment data stored in the first storage unit 10 contain information relating to road segments constituting a road network. Typically, for a road segment, these data comprise geographical information relating to road segment position and orientation, such as the geographical locations of its start and end points, and additional information quantifying a length of, a characteristic travel speed on, and/or a characteristic travel time for traversing the road segment. More generally, a weighting factor may be provided for a road segment which corresponds to one of the latter characteristics of the road segment. While, in the following, the weighting factors will be described as road segment weighting factors, it is to be understood that these weighting factors may either be associated with the road segment or with the road segment vertices. Further, weighting factors may be provided both for a road segment, i.e., an edge of a graph, and for road segment vertices, i.e., nodes of the graph. For simplicity, all these possibilities of associating weighting factors with road segments and/or road segment vertices will summarily be referred to as road segment weighting factors hereinafter. Also, road segment data may include still further additional information relating to the road segments. Frequently, road segment data are stored in the form of data arrays, as schematically indicated by data sets 11-13 stored in the first memory unit 10.

The tiling definition data stored in the second memory unit 20 determine all tiles of the tiling on the basis of which the rank information is to be computed. The data may be provided in the form of number multiplets specifying the coordinates of one or several tile corners. E.g., for a tiling consisting of rectangular tiles, the coordinates of the top left and bottom right corners may be provided. Tiling definition data may be stored in the form of arrays 21-23, with each array corresponding to one tile of the tiling. The tiling definition data may, however, also be provided in any other appropriate way, e.g., in the form of an algorithm which allows one to determine the tile vertices and edges.

The third memory unit 30 is provided for storing the results of the rank information computation.

The system for pre-processing road segment data further comprises a processing unit 40, a working memory unit 50, an additional working memory unit 60, and an output unit 70. The processing unit 40 is adapted to include data stored in one of the storage units 10, 20, or 30 into the working memory unit 50 or to remove data stored in the working memory unit therefrom, and to process data stored in the working memory unit 50. The data stored in the working memory unit 50 includes a subset of road segment data from the first storage unit. Computed rank information may be output via the output unit 70 or may be stored in the additional working memory unit 60 for subsequent use. The working memory unit 50 and additional working memory unit 60 may be a single device or different devices.

As will become evident from the following description and will be described in more detail below, the method for pre-processing road segment data according to the invention is well adapted to be carried out on a computer network or cluster. Various implementations for a parallelization of the method for pre-processing road segment data are feasible, e.g., using peer-to-peer or master-worker schemes. In the latter case, e.g., a master computer and each one of a plurality of worker computers at least comprise a processing unit and a working memory unit. Further, the computers may share common storage units, or may be equipped with individual storage units.

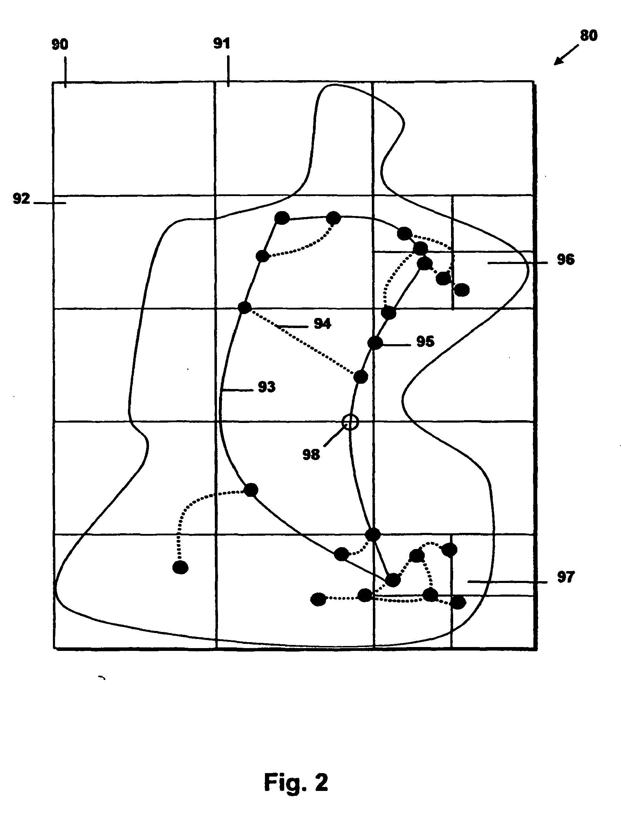

Next, the method for pre-processing road segment data performed by the system 1 shown in Fig. 1 will be explained. The pre-processing of road segment data is based on a tiling covering an area wherein the road segments are contained. A tiling 80, shown schematically in Fig. 2, comprises a plurality of tiles including tiles 90-92. The road network for which an optimum route is to be computed comprises a plurality of roads shown as solid and dashed lines. Roads may be of different types, e.g., in terms of allowed travel speeds, which may be quantified by weighting factors. The road network shown in Fig. 2 comprises two different types of roads, one with a first characteristic travel speed (indicated by solid lines in Fig. 2), e.g., road segment 93, and one with a second characteristic travel speed (indicated by dashed lines in Fig. 2), e.g., road segment 94. The endpoints of a road segment or road segment junctions or crossings define vertices (indicated by solid circles in Fig. 2) of the road network, e.g., at point 95.

Typically, the density of road segments and road segment vertices will be spatially varying and will be larger in urban areas. The tiling may be chosen such that, in areas 96 and 97 with high road segment or road segment vertex density, the tile size is smaller than in areas with smaller road segment or road segment vertex density, preventing the number of road segments or road segment vertices per tile from varying too strongly throughout the tiling. However, in most of the preferred embodiments discussed below, it is possible to start with a tiling having small square tiles with identical sizes.

For road segment data pre-processing, the tiling is chosen such that each road segment is contained in one tile of the tiling only, or, more precisely, that each road segment, with the exception of its vertices, is located in the inside of one tile only. This is achieved most easily by introducing additional vertices at all points where a road segment intersects a tile edge, e.g., at point 98 in Fig. 2 (indicated by an open circle). By introducing these additional vertices, a road segment is split into several new road segments. It is to be understood that choosing a tiling such that each road segment is contained within one tile only may require road segments to be redefined, as outlined above. In the following, it will be assumed that the road segment data and tiling definition data are already in a form in which each road segment is contained in one tile only. If this is not the case, in a first step, the system 1 for pre-processing road segment data redefines road segments by introducing additional vertices and computing weighting factors for the new road segments. The redefined road segment data may be stored in the first storage unit or one of the working memory units of system 1.

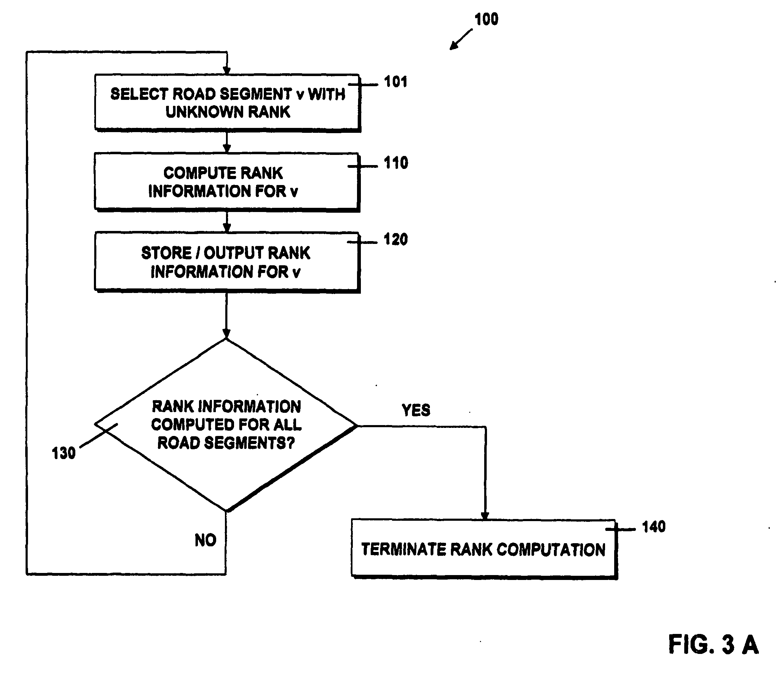

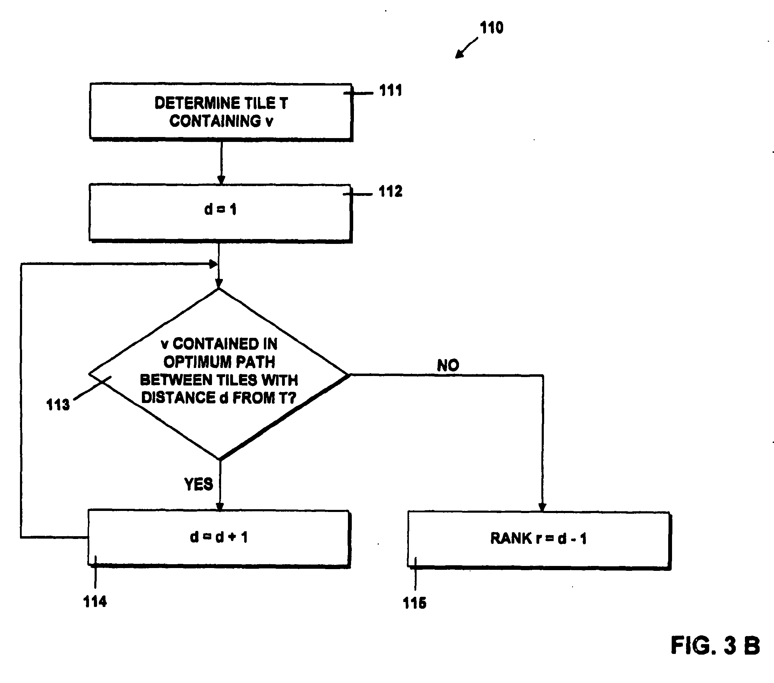

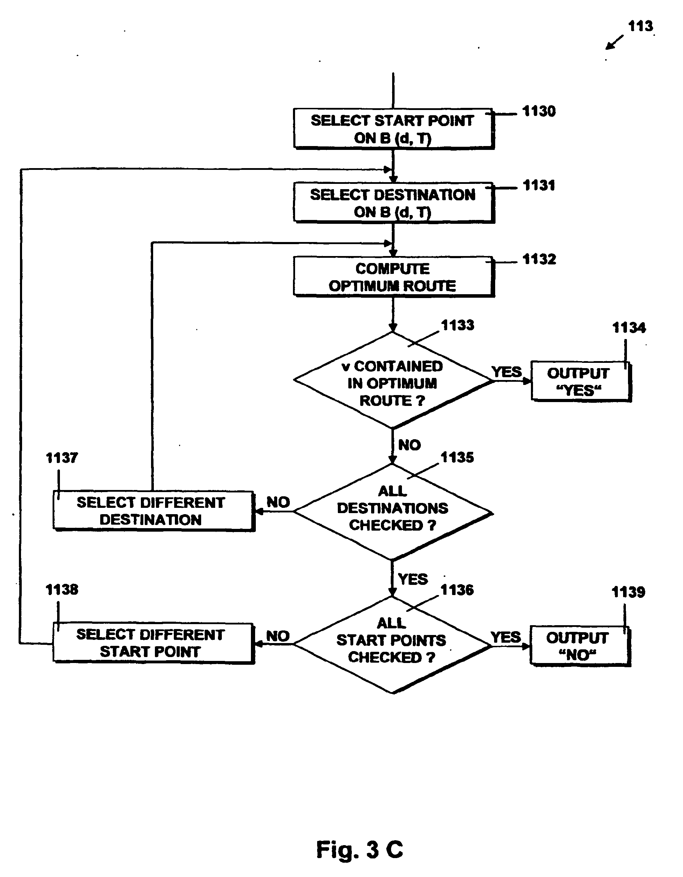

From the road segment data provided and based on the definition of the tiling, system 1 computes the rank information for each one of the road segments, as will be explained next with reference to Figs. 3-9. Fig. 3 A shows a schematic flow chart 100 indicating the basic steps performed by system 1 during the method for pre-processing road segment data. In a first step, a road segment v with yet unknown rank is selected at step 101. In step 110, described in more detail below, the rank information for road segment v is computed and either output via output unit 70 or stored in the third storage unit 30 or the additional working memory unit 60 at step 120. Depending on whether there are still road segments with unknown rank information, as determined at step 130, the above-described steps are iterated for a different road segment with unknown rank information or terminated at step 140.

The central part of the process 100 is the step 110 of determining the rank information for a given road segment v, which will next be described in more detail with reference to Figs. 3 B and 3 C. Figure 3 B shows a schematic flow chart of the process performed in the step 110 of determining the rank information. First, a tile T containing v is determined at step 111. Subsequently, the maximum of a tile distance is determined for which the road segment v is still contained in an optimum route connecting a start road segment contained in a tile having this tile distance from tile T and a destination road segment contained in a tile having this tile distance from tile T. This maximum of a tile distance is defined to be the rank value of the road segment. The rank information may be equal to the rank value, or may be determined based on the rank value, as further explained below. Determining this maximum is achieved by incrementally increasing the tile distance from an initial value defined in step 112, subsequently determining whether v is still contained in an optimum path at step 113, and, in dependence on the result of step 113, increasing the tile distance at step 114 or setting the rank information to be equal to the maximum of the tile distance for which the road segment v is still contained in an optimum route connecting a start road segment contained in a tile having this tile distance from tile T and a destination road segment contained in a tile having this tile distance from tile T, i.e., equal to the rank value, at step 115.

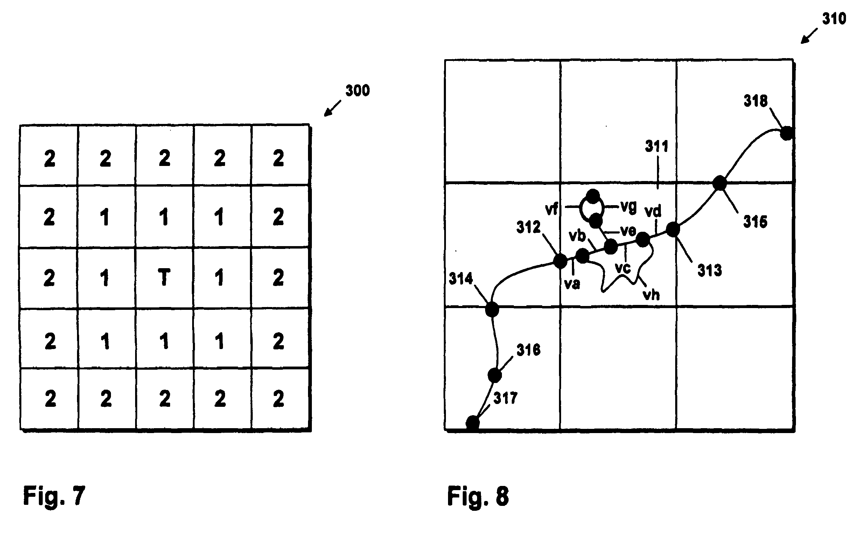

While a tile distance may be defined in various ways, according to an embodiment of the invention the distance between two tiles is defined as the minimum number of tile edges or corners traversed on a path connecting the two tiles, or, put differently, as the minimum number of horizontal, vertical, or diagonal hops between neighbouring tiles required to reach one of the two tiles from the other one of the two tiles. In Fig. 7, this is illustrated schematically for a tiling 300. The numbers indicate the tile distance of each of the tiles from the central tile T, with the tile distance defined as just described.

Returning now to Fig. 3 B, step 113 of determining whether a road segment v contained in tile T is contained in an optimum route from a start road segment to a destination road segment, with both start road segment and destination road segment located in tiles having at least tile distance d from tile T, could be performed by determining all optimum routes connecting a vertex of an arbitrary start road segment located in an arbitrary tile having tile distance d from tile T and a vertex of an arbitrary destination road segment located in an arbitrary tile having the tile distance d from tile T. However, as can be seen from Fig. 8, it is sufficient to consider only a subset of such possible start points and destinations.

Fig. 8 schematically shows a road network and a tiling 310. Assuming that the rank value of road segment va is to be determined, in a first step, it is to be determined whether there is an optimum route connecting a start road segment and a destination road segment, each located in a tile having tile distance 1 from tile 311, the optimum route containing road segment va. In principle, it is therefore necessary to compute all optimum routes connecting arbitrary pairs of start points and destinations selected from points 312-318. However, because any optimum route having a start road segment and destination road segment located in a tile having a tile distance equal to 1 from tile 311 necessarily intersects an edge of tile 311, and because each road segment is contained in one tile only, it is sufficient to compute all optimum routes connecting a start point and destination, each located on an edge of tile 311. In the present case, the only remaining points to be considered for optimum route search therefore are 312 and 313.

A similar argument remains valid for larger values of tile distance. In particular, instead of determining all optimum routes interconnecting start road segments and destination road segments located in tiles having tile distance d from tile T, it is sufficient to compute optimum paths for start points and destinations located on a boundary of all tiles having a tile distance less than d from tile T, in the following referred to as d-boundary of tile T, B(d,T).

Therefore, step 113 may be performed according to the following method illustrated by Fig. 3 C. A start point and destination located on the d-boundary of tile T are selected in steps 1130 and 1131, respectively, and an optimum route connecting these two points is computed in step 1132. The computation in step 1132 can be performed using standard methods, such as Dijkstra's algorithm or an A* algorithm. In the letter case, an estimate for the cost of an optimum route may be obtained from an air distance and the air distance divided by a characteristic travel speed for distance- and time-based optimum route searches, respectively. If v is contained in the computed optimum route, process 113 outputs "yes" at step 1134. Otherwise, the process is repeated for all possible start point and destination pairs at steps 1135 and 1136, respectively, by selecting different destinations and start points on the d-boundary of T at steps 1137 and 1138, respectively. If v is not contained in any such optimum route, step 113 outputs "no" at step 1139.

It should be noted that "optimum" may mean optimum in terms of distance, travel time, either of these two avoiding tunnels or ferries, or any other routing option a user might be interested in. The optimum route will vary depending on the routing options selected. Technically, the different modes are usually accounted for by different road segment weighting factors which depend on the selected mode.

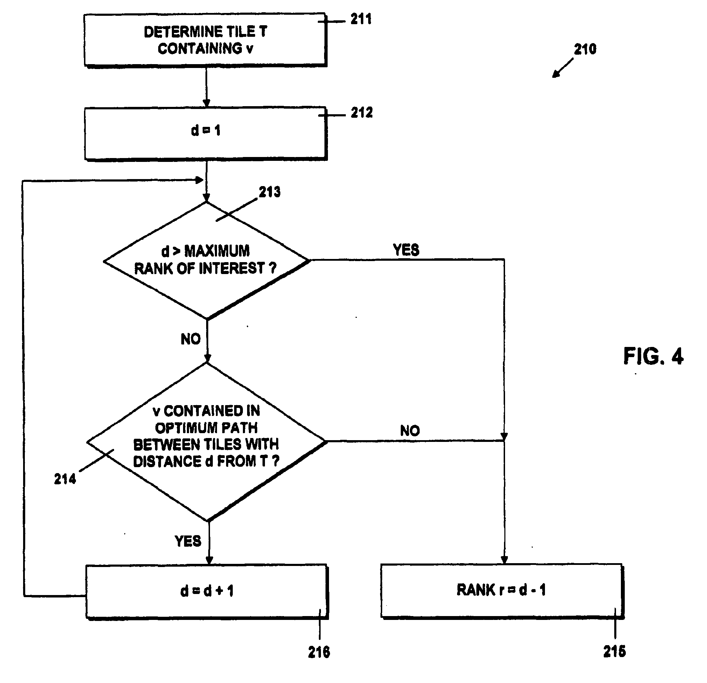

By combining the flow charts shown in Figs. 3 A-C, the complete process for computing the rank information for all road segments is obtained. However, it should be noted that it may not be necessary to know the real rank value r. Rather, it may be sufficient to know the exact rank value only if the rank value is below a certain threshold, a maximum rank of interest. The maximum rank of interest may be given by a characteristic value for which the number of road segments having a rank exceeding it is sufficiently small that all such road segments may be easily stored in a working memory unit of, e.g., a navigation system. The computation of the rank information may then be terminated at a specific value, as indicated by process 210 shown in Fig. 4, which is adapted to replace process 110 in Fig. 3 A. In addition to the steps performed in process 110, at step 213, it is determined whether the value of d for which optimum routes are to be computed already exceeds a maximum rank of interest. The rank information for a road segment is then equal to its rank value if the rank value is less than or equal to the maximum rank of interest, and is equal to the maximum rank of interest otherwise.

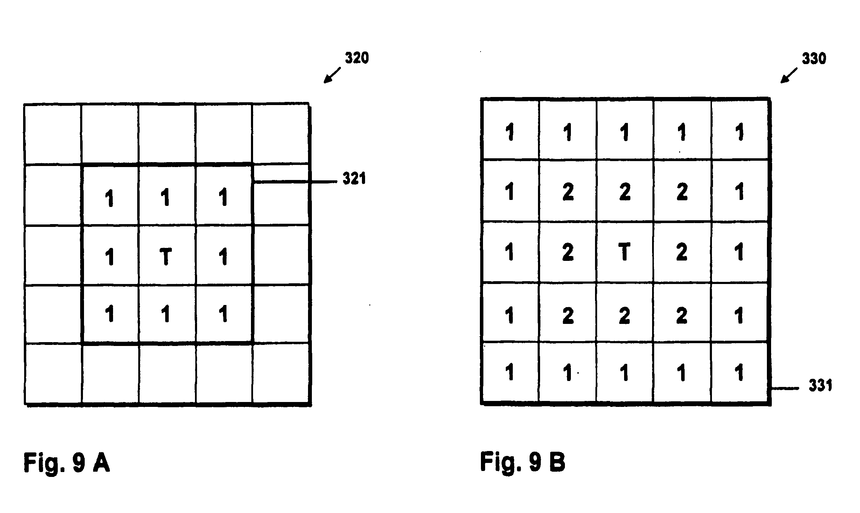

Next, a variant of the method for computing the rank information will be described, the variant allowing for a more efficient determination of rank values. As compared to the above-described method, the main difference is that, in a first step, all road segments having a rank value of at least 1 are determined. Then, in a second step, all road segments having a rank value of at least 2 are determined, etc. I.e., the rank information is computed sequentially for increasing rank values. The central step of determining whether the road segment v is contained in an optimum route, as shown in Fig. 3 C, remains similar to the method discussed above. However, because the computation of rank values is performed sequentially for increasing rank values, the step of computing an optimum route at 1132 after a start point and destination have been selected may be based on results obtained in preceding steps. This may greatly simplify the computation of rank values, as will be described next with reference to Figs. 9 A and B.

Figure 9 A shows a tiling 320. Assuming that the road segments in tile T having a rank value of at least 2 are to be determined, as explained above, all optimum routes connecting a start point and destination located on a 2-boundary of tile T, indicated by a thick solid line 321, have to be computed. Note that, according to the variant method for computing the rank information, in a preceding step all road segments having a rank value of at least 1 have been determined for all tiles. Therefore, the step of determining all road segments in T having a rank value of at least 2 may be restricted to all such road segments having a rank value of at least 1. Furthermore, any optimum path connecting a start point and destination located on the 2-boundary of tile T traverses a tile having a tile distance equal to 1 from tile T. The optimum route search in step 1132 may, hence, be restricted to those road segments contained in tiles having a tile distance equal to 1 from T which have a rank value of at least 1. This is shown schematically by the numbers in the tiles having a tile distance equal to 1 from tile T in Fig. 9 A. By reducing the number of road segments to be considered for optimum route search, the computational complexity may be reduced and runtimes may be decreased.

A similar argument remains valid for larger values of d, as shown schematically for a lattice 330 in Fig. 9 B. Assuming that the road segments in tile T having a rank value of at least 3 are to be determined, the optimum route search in step 1132 may be restricted to road segments having a rank value of at least 1 for tiles having a tile distance equal to 2 from tile T, and road segments having a rank value of at least 2 for tiles having a tile distance equal to 1 from tile T. Note that these road segments have already been determined in preceding steps. Therefore, the computational complexity may be reduced by computing rank values recursively.

More generally, if the optimum route connecting a start point contained in a tile X and a destination contained in a tile Y is to be determined, in a tile Z only road segments having a rank value larger than or equal to the smaller one of the tile distances between tiles Z and X and tiles Z and Y, respectively, need to be considered. Therefore, for increasing rank values, the set of road segments on which an optimum route search is to be performed may be reduced based on results obtained in preceding steps for all tiles.

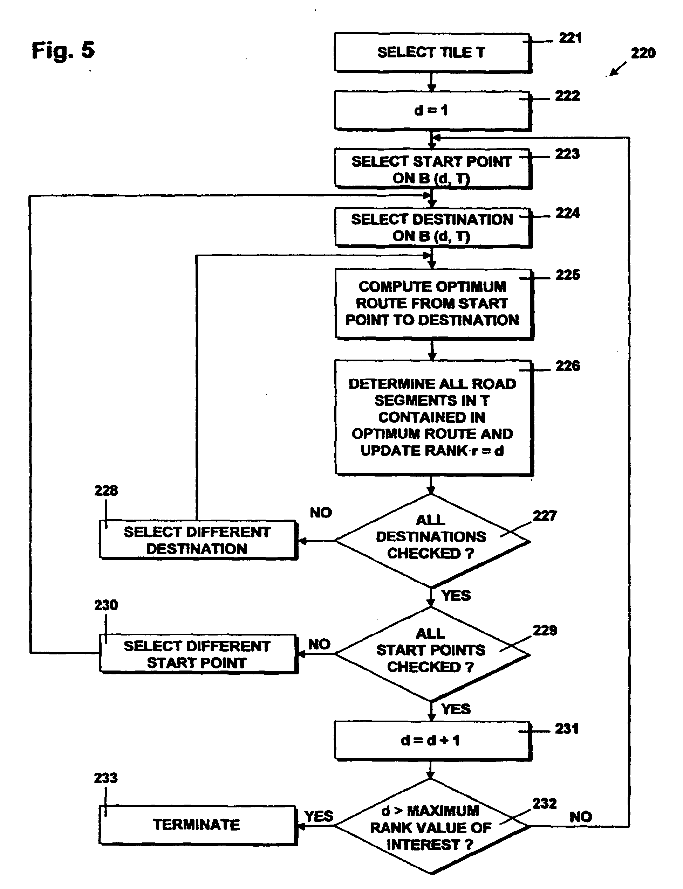

According to a second alternative method for computing the rank information, schematically illustrated by the flow chart of Fig. 5, runtimes may be further decreased by simultaneously determining all road segments contained in tile T having a rank value of at least d with a minimum number of optimum route computations. This is achieved by modifying the alternative method for computing the rank information above by computing an optimum route connecting a start point and destination located on the d-boundary of tile T, and then determining all road segments in tile T contained in this optimum route simultaneously, as indicated by step 226. The rank information of all these road segments is updated to d. This step is repeated for all possible combinations of start points and destinations, as indicated by steps 227-230. As described for the alternative method for computing the rank information above, importantly, the optimum route search in step 225 is based on a subset of road segments selected based on results obtained in preceding steps for lower rank values.

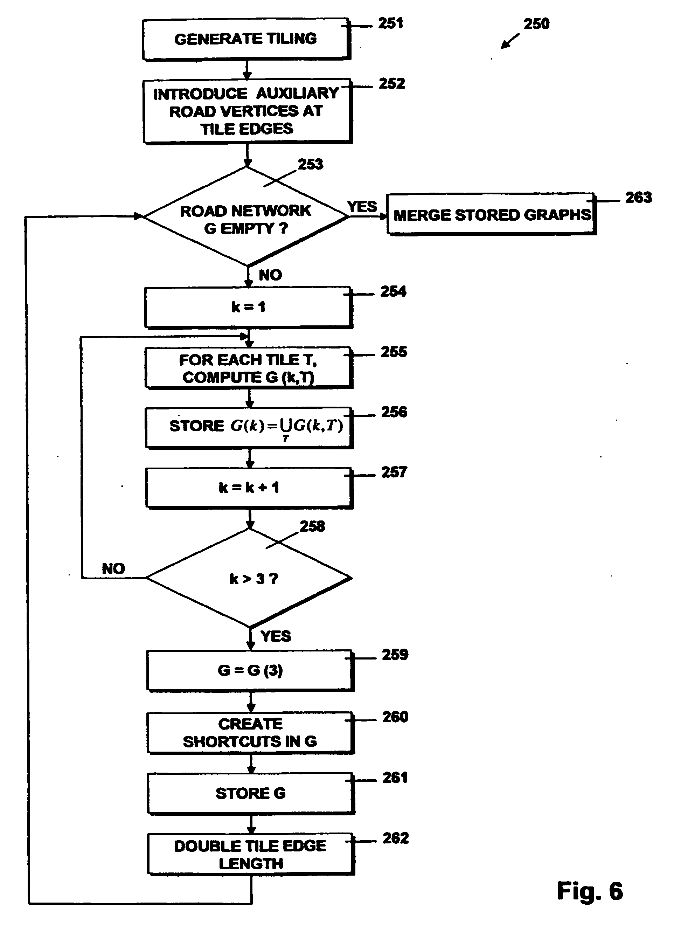

According to a third alternative method for computing the rank information, as shown in Fig. 6, the computation of the rank information may be further streamlined by increasing the tile size, i.e., by redefining the tiles while the rank value to be determined increases, while simultaneously redefining the road network or, more technically, the graph on which optimum route search is to be performed. According to this method 250, first a tiling is defined at step 251. Auxiliary road segment vertices are introduced at intersections of road segments and tile edges at step 252. While the road network or graph is not empty, the road segments having rank values equal to or greater than 1, 2, and 3 are computed in steps 254-258. In one embodiment, step 255 comprises steps 223-230 in Fig. 5. Importantly, any optimum route computation required for these steps may again be based on previously obtained results for smaller rank values. The road segments of a tile T having a rank value of at least k are denoted by G(k,T), and the union of all such road segments of the full tiling is denoted by G(k). Note that G(k,T) is the set of all road segments in T that occur in an optimum route having a start point and destination on the (k-1)-boundary of T. At step 259, the road network is redefined as the set of all road segments determined to have a rank value of at least 3 in the preceding loop. The number of road segments is reduced by introducing shortcuts at step 260, as will be explained in more detail below. After doubling the tile edge length at step 2.62, the above steps are iterated based on the new road network or graph G and the new tiling.

According to the third alternative method it is possible to compute the rank information starting from small square tiles with an initial edge length s₁, e.g., s₁=1000 m. Note that the rank information assigned according to this method is somewhat different from that of the preceding methods because the lattice is redefined at intermediate steps. For example, for road segments determined to have a rank value equal to 1 for the redefined tiling with tile edge length s₂= 2 × s₁ and the correspondingly redefined road network, the rank information is set equal to 4. Note that this rank information is a "pseudo-rank" which does not directly translate into a rank value for the original tiling. Rather, a rank information of 4 in the present method denotes the road segments having a rank value of at least 1 in the redefined road network and for the redefined tiling having twice the original tile edge length. Rank information is assigned correspondingly in subsequent iterations.

Also, for this definition of rank information, while being based on increasingly coarsened tilings, the rank information is a measure for the importance of a road segment for long-distance travel or, more specifically, for long-distance routes connecting tiles of the tiling. While the rank or pseudo-rank information computed for the hierarchy of coarsened tilings cannot be directly translated back into rank values for the original tiling, they still allow an exact determination of optimum routes based on this rank information, as will be explained later.

Further, it should be noted that the rank values defined in terms of the original road network and original tiling and the rank values defined for the first redefined road network and first coarsened tiling are still interconnected by inclusion relations. For example, the set of all road segments having a rank value of at least 6 in terms of the original road network and tiling is a subset of the set of road segments of the redefined road network having a rank value of at least 2 in terms of the first redefined tiling, with tile distances being measured in units of the redefined tiles in the latter case. Similarly, the set of all road segments having a rank value of at least 5 in terms of the original road network and tiling contains the set of road segments of the redefined road network having a rank value of at least 3 in terms of the first redefined tiling, with tile distances being measured in units of the redefined tiles in the latter case. The latter relation may be easily seen from the fact that, if A is a tile of the original tiling T and A' is the tile of the first coarsened tiling T' containing A, the set of tiles in T having a tile distance of less than or equal to 4 from A, with the tile distance being measured in terms of T, is contained in the set of tiles in T' having a tile distance of less than or equal to 2 from A', with the tile distance being measured in terms of T'. Such inclusion relations may also be employed for optimum route determination, as will be explained below.

The method shown in Fig. 6 introduces a hierarchy of coarsened tilings and corresponding rank information.

Naturally, other variants of the advantageous method shown in Fig. 6 are also possible. For example, the number of iterative rank value computations, i.e., the number of different k-values in the loop 254-258, may vary depending on tile size. For example, the iteration may extend over the values from 1 to 3 for the original tile size, but from 1 to 4 for all subsequent tile sizes. Further, the iteration over redefined road networks and tile edge lengths need not be continued until the road network or graph G is empty, but may be terminated.

Returning to Fig. 8, road segments va and vd are necessarily contained in an optimum route connecting points 312 and 313 on the 1-boundary of tile 311 and, therefore, have a rank value of at least 1. Road segments ve, vf, and vg are not contained in any optimum route traversing tile 311 and, therefore, have a rank value equal to 0. The rank value of road segments vb, vc, and vh depends on whether an optimum route connecting points 312 and 313 is via road segments vb and vc or via road segment vh. This depends on the weighting factors assigned to the respective road segments. For distance based optimum routes, road segments vb and vc have a rank value equal to 1, while vh typically will have a rank value 0. For time-based optimum route searches, vh has a rank value 1 if the travel time on road segment vh is shorter than the travel time on road segments vb and vc. It should also be noted that weighting factors and, therefore, also optimum routes may depend on the travel direction. Assuming, e.g., that vb, vc, and vh are one-way roads with the allowed driving direction on vh being opposite to the one on both vb and vc, then vb, vc, and vh all have a rank value equal to 1.

Continuing to refer to Fig. 8, after computing the rank information of all road segments contained within a tile by either specifying the exact rank values or a lower bound thereof if the rank value exceeds a certain threshold, the pre-processing of road segment data may contain a step of intercombining several road segments which form a sequence and are contained within one tile into one new road segment. This is also referred to as creating a shortcut, e.g., in Fig. 6. For example, if road segments vb and vc also have rank value 1, road segments va, vb, vc, and vd can be intercombined into a new road segment extending from 312 to 313. The weighting factor of the new road segment is computed from the weighting factors of va, vb, vc, and vd. Such a road segment intercombination is a part of the method for rank information computation explained with reference to Fig. 6 above. By reducing the total number of road segments, additional speedup during subsequent optimum route determination may be achieved, e.g., in a navigation system. However, it should be noted that the new road segment may have to be broken up into its components during a subsequent step. Therefore, information referencing the original road segments should be included as an attribute of the new road segment. Also, an intercombination of road segments can further be based on the rank information. E.g., according to an embodiment, only road segments having equal rank or a rank value at least equal to a specific minimum value may be intercombined.

The computed rank information may be stored in the third storage unit 30 or in the additional working memory unit 60 of system 1 shown in Fig. 1. In particular, storing rank information in one of the working memory units 50 or 60 of system 1 is particularly useful for subsequent retrieval of the rank information in a recursive method for computing the rank information as outlined above. The rank information may be stored in a separate storage or memory unit with an identifier allowing one to identify the corresponding road segment, or may be stored as an additional attribute for the corresponding road segment together with road segment data, as indicated by arrays 31, 32, 61, and 62 in Fig. 1.

According to some of the methods for computing the rank information outlined above, in particular the recursive methods, the complexity of optimum route computation in step 1132 in Fig. 3 C or 225 in Fig. 5 is reduced by selecting a subset of road segments for which optimum route search is to be performed. By reducing the total number of road segments to be taken into account, it is feasible to store all road segments required for optimum route computation, at least for a given tile T and a given boundary thereof, in the working memory unit 50. Therefore, the working memory unit 50 of system 1 is preferably adapted to store all road segment data and, if required, tiling definition data necessary for optimum route computation as performed in steps 1132 or 225, respectively.

As already mentioned above, the methods for computing the rank information according to the invention are well adapted to be performed on a computer cluster or grid. This is desirable in order to reduce the total processing time for rank computation. Since each step of the above-described methods for computing the rank information for road segments contained in a tile only operates on the neighbourhood of this tile, it is easy to adapt the methods to various schemes adapted for parallel computation of road segment rank information, such as peer-to-peer and master-worker schemes. Exemplarily, but by no means limiting, a master-worker scheme will be illustrated next. Then, a network of computers with one designated master and any number of workers may be employed. Conceptually, the master breaks down the problem into small jobs, delegates the jobs to the workers, and may also finally collect the results. Master and workers may operate on a common copy of the road network data, with each road segment being marked with the maximum rank computed so far. In practice, it may be easier to have only one copy of the full data with exclusive access for the master and to let the workers operate on local copies of subsets of road segments created by the master for each job. In the recursive methods described above, wherein rank information is computed for increasing rank values, in an outer loop, the master iterates over the rank value k starting from rank value 0, i.e., it iterates over the size of tile neighbourhoods to be considered. In an inner loop, the master iterates over all tiles and delegates the computation of the subset of road segments having at least rank k+1 and being contained in such a tile, e.g., A. In order to compute these road segments G(k+1,A) for a specific tile A, only a subset of road segments needs to be considered which may be selected as described in the above methods. More specifically, e.g., in order to compute G(k+1,A), in a tile B having a tile distance d_{AB}≤k from tile A, only the road segments contained in G(min(k, k+1-d_{AB}), B) need to be considered. As rank information is computed for increasing rank values, these road segments are already known. The union of these road segments over all tiles B is sufficient for the computation of G(k+1,A). If a worker determines a road segment to be contained in G(k+1,A), the road segment's rank attribute in the common storage is increased to k+1. In the absence of a common storage, the workers uses the local copy sent by the master, updates the rank in the local copy, and sends the updated data back to the master. The master then updates the data stored in the copy of the full data set. After all workers have computed the desired results, the master increments k and starts the next iteration of the outer loop.

The above master-worker scheme can be further optimized. In particular, it is more efficient to create jobs for larger groups of tiles than for single tiles. Therefore, workers may be assigned sets of tiles which are selected such that each one of these sets is small enough that the union of all road segment data and associated data required for computing G(k+1,A) for each A in this set can be stored simultaneously in the memory of a worker. The worker then loads all this required data and iterates over all tiles in the set of tiles it has been assigned. In this way, the communication overhead between master and workers may be reduced.

Independent on whether a single computer or a computer cluster or grid is employed for computing the rank information, the computed rank information may be output via output unit 70 for subsequent use in optimum route computation. In order to further speed up the latter, road segment data and the corresponding rank information are preferably arranged in such a way as to facilitate and expedite the retrieval of the required data. This is achieved by arranging road segment data for storage or output in a specific way. If the tile size has been varied for rank value determination, as discussed for the third alternative method for determining the rank information above, the road segment data is first arranged according to tile size. The data corresponding to different tiles are arranged according to a tile geographic position. For every tile, the data is arranged according to the rank information. Typically, the road segment data is stored as an array including the rank information as road segment attribute and, if the corresponding road segment has been formed by intercombining several original road segments, also includes information relating to the original road segments. In order to further expedite data retrieval, an index file may be provided containing information on where in the road segment database the data relating to a specific tile size, tile, and rank information may be found.

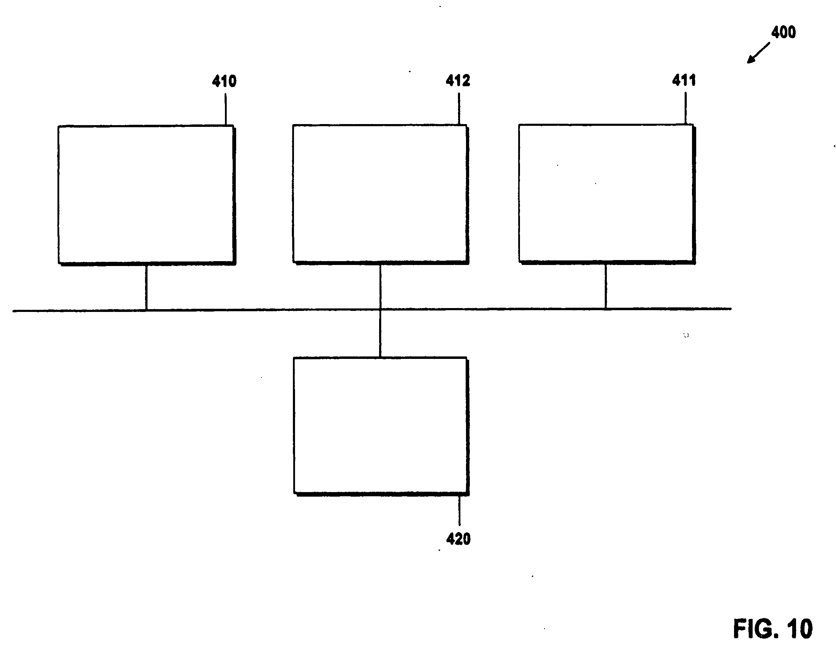

Because the rank information computed in a pre-processing phase provides a measure of the importance of road segments which is based on map geometry, the rank information may be retrieved to speed up an optimum route determination performed at a later stage. Such an optimum route determination is frequently performed by a navigation system onboard a vehicle. A navigation system and system for optimum route determination thereof according to an embodiment of the invention will be described next with reference to Figs. 10-13.

The navigation system shown in Fig. 10 comprises an input unit 410, an output unit 411, a position detection means 412, and a system for determining, or more specifically, computing an optimum route 420. Each of the components 410-412 may be one of the corresponding components known from conventional navigation systems. E.g., the input unit may comprise a touch-screen, the output unit may comprise a display or loudspeakers coupled to a text-to-speech conversion unit, and the position detection means may comprise a GPS receiver or a gyroscope.

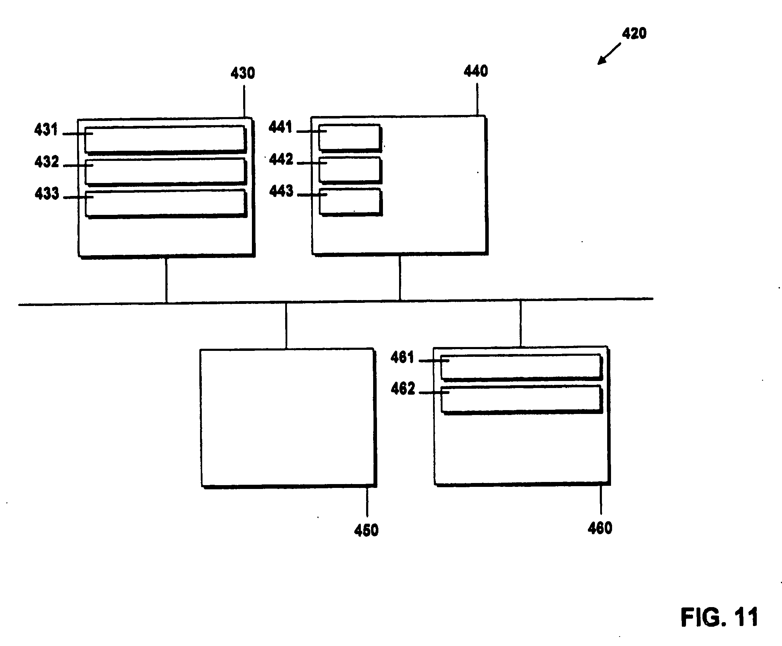

The system for computing an optimum route 420 is shown in more detail in Fig. 11. System 420 comprises a first storage unit 430 which, according to the present embodiment, is adapted to store both road segment data and the associated rank information computed during the pre-processing phase described above. The data are stored as arrays 431-433, the rank information being included into these arrays as additional road segment attribute. Alternatively, the rank information data may also be provided via a separate storage unit. System 420 further comprises an additional storage unit 440 for storing tiling definition data, e.g., in the form of number multiplets 441-443. System 420 further comprises a processing unit 450 and a working memory unit 460 adapted to store subsets of road segment data, e.g., again in the form of arrays 461 and 462 which contain information on the road segment position and orientation, and associated weighting factors and/or rank information. The tiling definition data and road segment data are substantially identical to the data sets employed for road segment data pre-processing, with the exception that the road segment data additionally include the rank information.

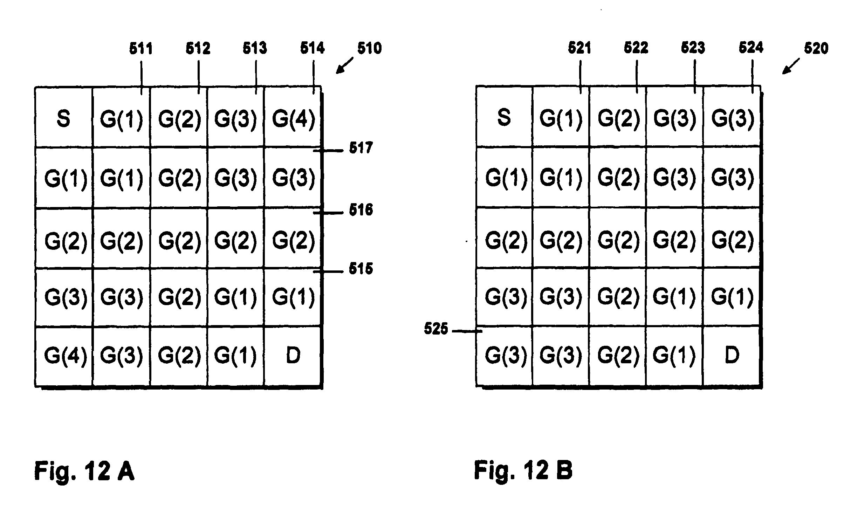

After receiving information on a route start point and destination, the system for optimum route determination 420 initiates an optimum route search and computes an optimum route. Providing the rank information and a tiling for the area containing the road segments allows the optimum route computation to be carried out efficiently, as will be described next with reference to Figs. 12 A and B. Assuming that the start point is contained in a start tile S and the destination is contained in a destination tile D, and assuming further that the start and destination tiles have a tile distance greater than 1, any optimum route connecting the start point and destination will traverse tiles having a tile distance of at least 1 from the start and destination tiles, respectively. Therefore, it is sufficient to consider only road segments having a rank value of at least 1 in all such tiles. Similarly, by definition of the rank value as described above, in a tile having a tile distance of at least 2 from both the start and destination tile, only road segments having a rank value of at least 2 are potentially contained in an optimum route from the start point to the destination. Therefore, it is sufficient to restrict an optimum route search to these road segments in the corresponding tiles. This is shown schematically in Fig. 12 A for a tiling 510 with start tile S and destination tile D arranged in opposite corners of the tiling. Tiles 511 and 515 have a tile distance equal to or greater than 1 from both the start and the destination tile. Therefore, only the subset of road segments having a rank value of at least 1 need to be considered, as is indicated schematically by the symbol G(1) designating this subset for the corresponding tiles. It should be noted that, naturally, G(1) is different for tiles 511 and 515, a tile index being suppressed for brevity. Similar arguments hold for tiles 512 and 516, for which only road segments having a rank value of at least 2 need to be taken into account, for tiles 513 and 517, for which only road segments having a rank value of at least 3 need to be taken into account, and for tile 514, for which only road segments having a rank value of at least 4 need to be taken into account. Therefore, an optimum route computation is performed taking into account the rank information and, more specifically, by computing an optimum route for a subset of road segments, the subset being selected based on the rank information and tiling data.

If the computation of the rank information is terminated at a maximum rank value of interest, the subset of road segments on which optimum route search is performed may include additional road segments, as indicated in Fig. 12 B. If, for the tiling 520, the maximum rank value of interest is equal to 3, i.e., the rank information 3 has been assigned to all road segments having a rank value of 3 or more, the subset of road segments on which optimum route search is to be performed will also include road segments having a rank value equal to 3 in tiles 524 and 525. By adding road segments to the subset, the computational complexity increases, but the method performed by the system for optimum route determination 420 still provides exact results.

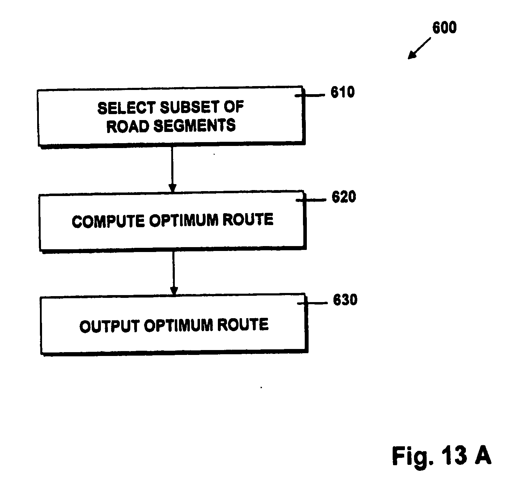

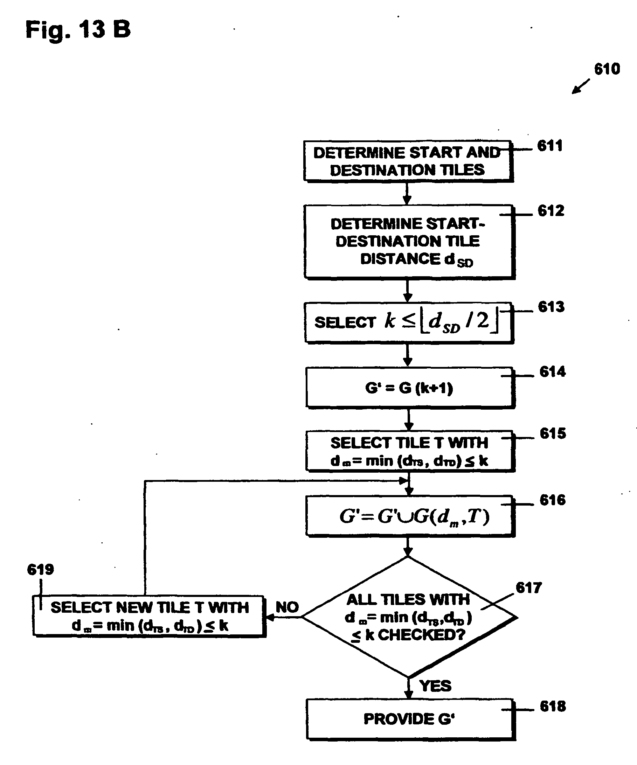

The method performed by system 420 will next be described with reference to Figs. 13 A and B. Referring to Fig. 13 A, a method for computing an optimum route according to this embodiment basically comprises the steps of selecting a subset of road segments based on the rank information and tiling data, indicated at step 610, computing an optimum route based on the subset of road segments, indicated at step 620, and outputting the optimum route at step 630, e.g., to the output unit of the navigation system.

A flow chart representation of a process for selecting a subset of road segments according to this embodiment is shown in more detail in Fig. 13 B. First, in step 611, the start tile containing the start point and destination tile containing the destination are determined. In step 612, the start-destination tile distance d_{SD} between these tiles is computed. Subsequently, in step 613, an integer k less than or equal to the floor of d_{SD} divided by two is selected. If the rank information computation in the pre-processing phase has been terminated at a maximum rank value of interest, k will typically be chosen such as to not exceed this maximum rank value of interest minus 1. In step 614, the subset G' of road segments on which optimum route search is to be performed is initialized as the set of all road segments contained in all tiles of the tiling and having a rank value of at least k+1, denoted by G(k+1). After initializing the subset G', in steps 615-619, additional road segments are included into G'. For each tile T having a tile distance less than or equal to k from either the start tile S or the destination tile D, the distances being denoted by d_{TS} and d_{TD}, respectively, the set of all road segments contained in T and having a rank value equal to or larger than the smaller one of the tile distances d_{TS} and d_{TD} is included into G'. The set of road segments contained in T and having a rank value equal to or larger than the smaller one of the tile distances d_{TS} and d_{TD} is denoted by G (dₘ, T) . This step is iterated for all tiles having a distance less than or equal to k from either the start tile S or the destination tile D. In particular, according to this method, all road segments contained in the start or destination tiles are included into G'. After the iteration terminates, G' is provided for further processing in step 618.

As described above, e.g., for the third alternative method of computing the rank information illustrated in Fig. 6, the rank information may be computed for a hierarchy of coarsened tilings. In this case, the rank information or pseudo-rank value computed for a coarsened tiling does not directly translate into a rank value for the original tiling. However, by employing the same hierarchy of coarsened tilings during optimum route computation as during road segment data pre-processing, an exact optimum route may still be computed efficiently. Therefore, if road segment data pre-processing has been based on a hierarchy of tilings, tiling definition data is provided for each one of these tilings for optimum route computation, e.g., in the form of a mathematical function describing each one of the tilings.

For a hierarchy of tilings, with rank values being computed for the various levels of the hierarchy, the step of selecting a subset of road segments 610 is modified as compared to the process described above, albeit, at each level of the coarsening hierarchy, the process is substantially similar to the one shown in Fig. 13 B. Consider the case that, during data pre-processing, after computation of all road segments having a rank value of at least r, the road network is redefined for the first time while the tiling is simultaneously coarsened from the original tiling T to T'. Then, the road segments having a rank value of at least 0, of at least 1, etc., up to of at least r are know in terms of the original tiling T. Then, the subset of road segments in step 610 is selected in the following way. First, for all road segments having a distance of less than r from the tile S containing the start point and tile D containing the destination, road segments are included into G' similarly to steps 615, 616, 617, and 619 of Fig. 13 B described above. Subsequently, the sets of tiles in T' covering the sets of tiles in the original tiling T having a distance of less than r from S and having a distance of less than r from D, denoted as S' and D', respectively, and referred to as "hulls" of the corresponding set of original tiles are determined. Note that the tile distance of less than r is still to be measured in terms of the original tiling T. Subsequently, for each of the original tiles contained in S' and having a distance of at least r from S, and for each of the original tiles contained in D' and having a distance of at least r from D, the road segments in these tiles having a rank value of at least r-1 are included into the subset G' of road segments. Outside of S' and D', road segments may be included into G' based on rank information computed for the first coarsened tiling. More specifically, for any tile A' of the coarsened tiling having a distance of at least k from both S' and D', it is sufficient to include the set of road segments contained in A' and having a rank value of at least k, but now as determined with respect to the coarsened tiling, into G', similarly to steps 615, 616, 617, and 619 of Fig. 13 B. If the rank value computation for the coarsened tiling has been terminated for values less than k, the road segments contained in A' and having the maximum rank value still determined are included into G'.

For a hierarchy of tilings comprising several increasingly coarsened tilings, the above method of determining hulls of specific tile neighbourhoods and, outside of these hulls, including road segments into the subset of road segments G' on the basis of the coarsened tiling and corresponding rank values may be reiterated.

In the system for optimum route determination 420, the selection of a subset of road segments is achieved by the processing unit 450 which includes road segment data into the data stored in the working memory 460 based on the rank information and tiling definition, according to the criteria outlined above. Preferably, the working memory 460 provides sufficient storage capacity such that the road segment data corresponding to the subset G' can be stored simultaneously and an optimum route search may be performed on this data.

The step of computing an optimum route 620 for the subset of road segments is performed using a standard optimum path algorithm, such as Dijkstra's algorithm or an A* algorithm. In the latter case, for distance-based optimum routes, an air distance between two points provides a lower limit for the real optimum path cost. For time-based optimum routes, an air distance divided by a characteristic travel speed provides a lower limit for optimum path cost.

The optimum route is output at step 630, e.g., to a user interface such as the navigation system output unit 411. Because the system for computing an optimum route according to this embodiment interfaces with other components of the navigation device in essentially the same way as a conventional system for optimum route determination, it may readily be combined with the various features known from navigation systems in the art.

While the above-described method for computing an optimum route provides an exact solution for the optimum route problem, several variants of the above method are conceivable which provide at least approximate optimum routes. For example, in order to decrease computational complexity and, therefore, runtime and memory space requirements, the total number of road segments contained in the subset G' could be decreased by setting more stringent conditions for a road segment to be included into the subset G' in dependence on tile distances and rank values. Also, it is conceivable to use the rank information as a measure of road segment relevance independent of a tiling definition during optimum route determination. For example, road segments may be included into the subset G' if their rank value plus 1 is not less than the smallest distance of one of the road segment vertices from the start point and destination, respectively, divided by a characteristic tile edge length employed during road segment data pre-processing.

It is to be understood that, although the above method for optimum route computation has been illustrated for one tile size only, if the tile size has been varied during road segment data pre-processing, it is also varied correspondingly during optimum route determination. In particular, with increasing distance from the start point or destination, only road segments having higher rank information values need to be taken into consideration. With this rank information being computed based on an increasingly coarsened tiling, the tiling is coarsened correspondingly during optimum route computation.

While, according to the embodiment described above, only one mode for optimum route computation has been considered, multiple rank information data may be provided for one road segment, the different rank values corresponding to rank values for shortest route, fastest route, routes without tunnels, or routes without ferries, etc. Then, optimum route computation may be performed based on a user defined mode selection for any one of these different modes, with the subset of road segments being selected based on the rank information corresponding to the respective mode. If the rank information has been computed for various different cost functions, the rank information corresponding to each one of these cost functions may be stored for each road segment. Alternatively, for each road segment, only the maximum of the rank values obtained for the different cost functions may be stored, thus reducing the required storage capacity. However, the optimum route computation yields an exact optimum route even in the latter case.

## Claims

1. Method for pre-processing graph data for optimum route determination,
comprising the steps of
- providing said graph data (11-13), and
- defining a tiling (80; 130) covering an area wherein said graph is contained,
**characterized by** the step of
- determining a rank information (r) for an edge of said graph (93, 94; v; va-vh), such that the rank information (r) quantifies the relevance of said edge of said graph (93, 94; v; va-vh) for optimum routes connecting tiles (90-92; 311) of said tiling (80; 310),
wherein the tiling (80; 310) is defined such or the edges (93, 94; v; va-vh) of said graph are redefined such that each one of said edges (93, 94; v; va-vh) is contained in at most one tile (90-92; 311) of said tiling (80; 310), and
the step of determining the rank information (r) for an edge of said graph (93, 94; v; va-vh) comprises the steps of
- determining a tile (90-92; 311) containing said edge of said graph (93, 94; v; va-vh),
- selecting a first tile having at least a given tile distance from said tile (90-92; 311) containing said edge of said graph (93, 94; v; va-vh), and
- determining whether said edge of said graph (93, 94; v; va-vh) is contained in an optimum route having a start edge located in said first tile.

2. Method for pre-processing graph data according to claim 1, **characterized in that** the rank information (r) quantifies the relevance of said edge of said graph (93, 94; v; va-vh) for optimum routes connecting points located on tile edges.

3. Method for pre-processing graph data according to claim 1 or 2,
**characterized in that** a vertex of said start edge is located on an edge of said first tile.

4. Method for pre-processing graph data according to any one of claims 1-3,
**characterized in that** the step of determining the rank information (r) further comprises the step of
- selecting a second tile having at least said given tile distance from said tile (90-92; 311) containing said edge of said graph (93, 94; v; va-vh), with a destination edge of said optimum route being located in said second tile.

5. Method for pre-processing graph data according to claim 4, **characterized in that** a vertex of said destination edge is located on an edge of said second tile.

6. Method for pre-processing graph data according to any one of claims 1-5,
**characterized in that** the step of determining the rank information (r) further comprises the step of
- determining a maximum of said given tile distance for which said edge of said graph (93, 94; v; va-vh) is contained in an optimum route.

7. Method for pre-processing graph data according to any one of claims 1-6,
**characterized in that** the step of determining the rank information (r) is performed recursively for increasing values of said given tile distance.

8. Method for pre-processing graph data according to any one of claims 1-7,
**characterized in that**, for a given value of said given tile distance, optimum route search is performed on a subset of edges of said graph (93, 94; v; va-vh) selected based on results obtained for smaller values of said given tile distance.

9. Method for pre-processing graph data according to any one of the preceding claims,
**characterized by** the step of
- providing graph edge weighting factors,
wherein the step of determining the rank information (r) is further based on said weighting factors.

10. Method for pre-processing graph data according to any one of the preceding claims,
**characterized in that** the step of determining the rank information (r) is performed for each one of said edges of said graph (93, 94; v; va-vh).

11. Method for pre-processing graph data according to any one of the preceding claims,
**characterized in that** the tiles (90-92; 311) of said tiling (80; 130) are rectangular in shape.

12. Method for pre-processing graph data according to any one of the preceding claims,
**characterized in that** a tile distance between two tiles (90-92; 311) is defined as the minimum number of tile edges or tile vertices traversed on a path connecting said two tiles (90-92; 311).

13. Method for pre-processing graph data according to any one of the preceding claims,
**characterized by** the step of
- intercombining a graph edge sequence contained in one tile (90-92; 311) into a new graph edge.

14. Method for pre-processing graph data according to any one of the preceding claims,
**characterized by** the step of
- coarsening the tiling after a predetermined graph edge rank information (r) has been determined.

15. Method for pre-processing graph data according to any one of the preceding claims,
**characterized by** the step of
- outputting the determined rank information (r).

16. Method for pre-processing graph data according to any one of the preceding claims,
**characterized in that** the graph is a road network, the graph data being road segment data, and each edge of said graph corresponds to a road segment (93, 94; v; va-vh) of said road network.

17. Method for optimum route determination from a start point to a destination,
comprising the steps of
- providing graph data (431-433),
- providing rank information data (431-433), and
- determining an optimum route from the start point to the destination based on said graph data (431-433) and said rank information data (431-433),
**characterized in that**
said rank information data (431-433) is configured such that a rank information for an edge of said graph (93, 94; v; va-vh) quantifies the relevance of said edge of said graph (93, 94; v; va-vh) for optimum routes connecting tiles (90-92; 311) of a tiling (80; 310), the tiling (80; 310) covering an area in which said graph is contained,
said rank information for said edge of said graph (93, 94; v; va-vh) indicating whether said edge of said graph (93, 94; v; va-vh) is contained in an optimum route having a start edge located in a first tile having at least a given tile distance from a tile (90-92; 311) containing said edge of said graph (93, 94; v; va-vh).

18. Method for optimum route determination according to claim 17,
**characterized by** the step of
- selecting a subset of edges of said graph (93, 94; v; va-vh) based on said rank information (r),
wherein the step of determining an optimum route is performed based on said subset of edges of said graph (93, 94; v; va-vh).

19. Method for optimum route determination according to claim 17 or 18,
**characterized by** the step of
- defining said tiling (80; 310; 516; 520) covering said area wherein said edges of said graph (93, 94; v; va-vh) are contained.

20. Method for optimum route determination according to claim 19,
**characterized in that** the tiling (80; 310; 510; 520) is defined such or the edges of said graph (93, 94; v; va-vh) are redefined such that each one of said edges of said graph (93, 94; v; va-vh) is contained within at most one tile (90-92; 311) of said tiling (80; 310; 510; 520).

21. Method for optimum route determination according to claim 19 or 20 and claim 18,
**characterized in that** the step of selecting a subset of edges of said graph (93, 94; v; va-vh) comprises the steps of
- determining a start tile (S) containing said start point,
- determining a destination tile (D) containing said destination, and
- including an edge of said graph (93, 94; v; va-vh) into said subset of edges of said graph based on a rank information (r) of said edge of said graph and a tile distance of a tile (90-92; 311) containing said edge of said graph (93, 94; v; va-vh) from the start tile (S) or destination tile (D).

22. Method for optimum route determination according to any one of claims 19-21 and claim 18,
**characterized in that** the step of selecting a subset of edges of said graph comprises the steps of
- determining a start-destination tile distance from a start tile (S) containing said start point to a destination tile (D) containing said destination,
- selecting a minimum rank value based on said start-destination tile distance, and
- including all edges of said graph having a rank value equal to or greater than said minimum rank value into said subset of edges of said graph.

23. Method for optimum route determination according to any one of claims 17-22,
**characterized by** the step of
- providing graph edge weighting factors,
wherein the step of determining an optimum route is further based on said weighting factors.

24. Method for optimum route determination according to any one of claims 17-23,
**characterized by** the steps of
- receiving vehicle position data, and
- determining an optimum route from the vehicle position to the destination.

25. Method for optimum route determination according to any one of claims 17-24,
**characterized in that** the graph is a road network, the graph data being road segment data, and each edge of said graph corresponds to a road segment (93, 94; v; va-vh) of said road network.

26. System for pre-processing graph data, comprising
- a first storage unit (10) containing graph data (11-13), describing a graph (93, 94; v; va-vh),
- a second storage unit (20) containing tiling definition data (21-23), relating tiles to the edges of said graph,
- a working memory unit (50) for storing a subset of said graph data (11-13) and a subset of said tiling definition data (21-23), and
- a processing unit (40) adapted to process data stored in the working memory unit (50),
**characterized in that**
the processing unit (40) is adapted to determine a rank information (r) of an edge of said graph (93, 94; v; va-vh) based on said tiling (80; 310) such that the rank information (r) quantifies the relevance of said edge of said graph (93; 94; v; va-vh) for optimum routes connecting tiles (90-92; 311) of said tiling (80; 310),
wherein the pre-processing system is adapted
- to determine a tile (90-92; 311) containing said edge of said graph (93, 94; v; va-vh),
- to select a first tile having at least a given tile distance from said tile (90-92; 311) containing said edge of said graph (93, 94; v; va-vh), and
- to determine whether said edge of said graph (93, 94; v; va-vh) is contained in an optimum route having a start edge located in said first tile.

27. System for pre-processing graph data according to claim 26,
**characterized in that** the system is adapted to perform the method for pre-processing graph data according to any one of claims 1-16.

28. System for pre-processing graph data according to claim 26 or 27,
**characterized by**
- an additional working memory unit (60) coupled to said processing unit (40) and adapted to store a determined rank information (r).

29. System for pre-processing graph data according to claim 28,
**characterized in that** the processing unit (40) is adapted to process data stored in the additional working memory unit (60) for determining the rank information (r).

30. System for pre-processing graph data according to any one of claims 26-29,
**characterized in that** the working memory unit (50) has a storage capacity sufficient to store a subset of said graph data (61, 62) required for an optimum route search for determining the rank information (r).

31. System for pre-processing graph data according to any one of claims 26-30,
**characterized by**
- an output unit (70) for outputting a determined rank information (r).

32. System for pre-processing graph data according to any one of claims 26-31,
**characterized by**
- a third storage unit (30) for storing a determined rank information (r).

33. System for pre-processing graph data according to any one of claims 26-32,
**characterized in that** the system comprises at least one additional processing unit adapted to determine a rank information (r) of an edge of said graph (93, 94; v; va-vh) based on said tiling (80; 310),
wherein the processing unit (40) and the additional processing unit are adapted to determine rank information (r) of edges of said graph (93, 94; v; va-vh) in parallel.

34. System for pre-processing graph data according to any one of claims 26-33,
**characterized in that** the graph is a road network, the graph data being road segment data, and each edge of said graph corresponds to a road segment (93, 94; v; va-vh) of said road network.

35. System for optimum route determination,
comprising
- a first storage unit (430) containing graph data (431-433),
- a second storage unit (430) containing rank information data (431-433),
- a working memory unit (460) for storing a subset of said graph data (461, 462), and
- a processing unit (450) coupled to said working memory unit (460) and adapted to determine an optimum route from a start point to a destination based on rank information data (431-433),
**characterized in that**
said rank information data (431-433) is configured such that a rank information for an edge of said graph (93, 94; v; va-vh) quantifies the relevance of said edge of said graph (93, 94; v; va-vh) for optimum routes connecting tiles (90-92; 311) of a tiling (80; 310), the tiling (80; 310) covering an area in which said graph is contained,
said rank information for said edge of said graph (93, 94; v; va-vh) indicating whether said edge of said graph (93, 94; v; va-vh) is contained in an optimum route having a start edge located in a first tile having at least a given tile distance from a tile (90-92; 311) containing said edge of said graph (93, 94; v; va-vh).

36. System for optimum route determination according to claim 35,
**characterized by**
- an additional processing unit (450) adapted to include graph data (461, 462) or rank information data (431-433) into the data stored in the working memory unit (460) or remove it therefrom based on said rank information data (431-433).

37. System for optimum route determination according to claim 35 or 36,
**characterized by**
- a third storage unit (440) containing tiling definition data (441-443).

38. System for optimum route determination according to any one of claims 35-37,
**characterized in that** said working memory unit (450) has a storage capacity sufficient to store a subset of said graph data (461, 462) required for optimum route determination.

39. System for optimum route determination according to any one of claims 35-38,
**characterized in that** the system is adapted to perform the method for optimum route determination according to any one of claims 17-25.

40. System for optimum route determination according to any one of claims 35-39,
**characterized in that** the graph is a road network, the graph data being road segment data, and each edge of said graph corresponds to a road segment (93, 94; v; va-vh) of said road network.

41. Navigation system,
**characterized by**
- a system for optimum route determination (420) according to any one of claims 35-40.

42. Navigation system according to claim 41,
**characterized by**
- a position determining means (412) adapted to provide vehicle position data to said system for optimum route determination (420).

## Patentansprüche

1. Verfahren zum Vorverarbeiten von Graphdaten zur Bestimmung einer optimalen Route, umfassend die Schritte
- Breitstellen der Graphdaten (11-13) und
- Definieren einer Kachelung (80; 130), die einen Bereich bedeckt, in dem der Graph enthalten ist,
**gekennzeichnet durch** den Schritt
- Bestimmen einer Ranginformation (r) für eine Kante des Graphen (93, 94; v; va-vh), so dass die Ranginformation (r) die Relevanz der Kante des Graphen (93, 94; v; va-vh) für optimale Routen quantifiziert, die Kacheln (90-92; 311) der Kachelung (80; 310) verbinden,
wobei die Kachelung (80; 310) so definiert wird oder wobei die Kanten (93, 94; v; va-vh) des Graphen so umdefiniert werden, dass jede der Kanten (93, 94; v; va-vh) in maximal einer Kachel (90-92; 311) der Kachelung (80; 310) enthalten ist, und
wobei der Schritt des Bestimmens der Ranginformation (r) für eine Kante des Graphen (92, 94; v; va-vh) die Schritte umfasst:
- Bestimmen einer Kachel (90-92; 311), die die Kante des Graphen (93, 94; v; va-vh) enthält,
- Auswählen einer ersten Kachel mit wenigstens einem vorgegebenen Kachelabstand von der Kachel (90-92; 311), die die Kante des Graphen (93, 94; v; va-vh) enthält, und
- Bestimmen, ob die Kante des Graphen (93, 94; v; va-vh) in einer optimalen Route enthalten ist, die eine in der ersten Kachel gelegene Startkante aufweist.

2. Verfahren zum Vorverarbeiten von Graphdaten nach Anspruch 1,
**dadurch gekennzeichnet, dass** die Ranginformation (r) die Relevanz der Kante des Graphen (93, 94; v; va-vh) für optimale Routen, die auf Kachelrändern angeordnete Punkte verbinden, quantifiziert.

3. Verfahren zum Vorverarbeiten von Graphdaten nach Anspruch 1 oder 2,
**dadurch gekennzeichnet, dass** ein Knoten der Startkante auf einem Rand der ersten Kachel liegt.

4. Verfahren zum Vorverarbeiten von Graphdaten nach einem der Ansprüche 1-3,
**dadurch gekennzeichnet, dass** der Schritt des Bestimmens der Ranginformation (r) weiterhin den Schritt umfasst:
- Auswählen einer zweiten Kachel, die wenigstens den vorgegebenen Kachelabstand von der Kachel (90-92; 311), die die Kante des Graphen (92, 94; v; va-vh) enthält, aufweist, wobei eine Zielkante der optimalen Route in der zweiten Kachel liegt.

5. Verfahren zum Vorverarbeiten von Graphdaten nach Anspruch 4,
**dadurch gekennzeichnet, dass** ein Knoten der Zielkante auf einem Rand der zweiten Kachel liegt.

6. Verfahren zum Vorverarbeiten von Graphdaten nach einem der Ansprüche 1-5,
**dadurch gekennzeichnet, dass** der Schritt des Bestimmens der Ranginformation (r) weiterhin den Schritt umfasst:
- Bestimmen eines Maximums des vorgegebenen Kachelabstands, für den die Kante des Graphen (93, 94; v; va-vh) in einer optimalen Route enthalten ist.

7. Verfahren zum Vorverarbeiten von Graphdaten nach einem der Ansprüche 1-6,
**dadurch gekennzeichnet, dass** der Schritt des Bestimmens der Ranginformation (r) rekursiv für zunehmende Werte des vorgegebenen Kachelabstands durchgeführt wird.

8. Verfahren zum Vorverarbeiten von Graphdaten nach einem der Ansprüche 1-7,
**dadurch gekennzeichnet, dass** für einen vorgegebenen Wert des vorgegebenen Kachelabstands eine Suche nach einer optimalen Route auf einem Teilsatz von Kanten des Graphen (93, 94; v; va-vh) durchgeführt wird, die abhängig von Resultaten ausgewählt werden, die für kleinere Werte des vorgegebenen Kachelabstands erhalten wurden.

9. Verfahren zum Vorverarbeiten von Graphdaten nach einem der vorhergehenden Ansprüche,
**gekennzeichnet durch** den Schritt
- Bereitstellen von Gewichtungsfaktoren für Graphkanten, wobei der Schritt des Bestimmens der Ranginformation (r) weiterhin von den Gewichtungsfaktoren abhängt.

10. Verfahren zum Vorverarbeiten von Graphdaten nach einem der vorhergehenden Ansprüche,
**dadurch gekennzeichnet, dass** der Schritt des Bestimmens der Ranginformation (r) für jede Kante des Graphen (93, 94; v; va-vh) durchgeführt wird.

11. Verfahren zum Vorverarbeiten von Graphdaten nach einem der vorhergehenden Ansprüche,
**dadurch gekennzeichnet, dass** die Kacheln (90-92; 311) der Kachelung (80; 130) rechteckig sind.

12. Verfahren zum Vorverarbeiten von Graphdaten nach einem der vorhergehenden Ansprüche,
**dadurch gekennzeichnet, dass** ein Kachelabstand zwischen zwei Kacheln (90-92; 311) als die minimale Anzahl von Kachelkanten oder Kachelecken definiert ist, die auf einem Pfad, der die zwei Kacheln (90-92; 311) verbindet, überquert werden.

13. Verfahren zum Vorverarbeiten von Graphdaten nach einem der vorhergehenden Ansprüche,
**gekennzeichnet durch** den Schritt
- Kombinieren einer Graphkantenfolge, die in einer Kachel (90-92; 311) enthalten ist, zu einer neuen Graphenkante.

14. Verfahren zum Vorverarbeiten von Graphdaten nach einem der vorhergehenden Ansprüche,
**gekennzeichnet durch** den Schritt
- Vergröbern der Kachelung, nachdem eine vorherbestimmte Ranginformation (r) für Graphenkanten bestimmt worden ist.

15. Verfahren zum Vorverarbeiten von Graphdaten nach einem der vorhergehenden Ansprüche,
**gekennzeichnet durch** den Schritt
- Ausgeben der bestimmten Ranginformation (r)

16. Verfahren zum Vorverarbeiten von Graphdaten nach einem der vorhergehenden Ansprüche,
**dadurch gekennzeichnet, dass** der Graph ein Straßennetz ist, wobei die Graphdaten Straßensegmentdaten sind, und wobei jede Kante des Graphen einem Straßensegment (93, 94; v; va-vh) des Straßennetzes entspricht.

17. Verfahren zum Bestimmen einer optimalen Route von einem Startpunkt zu einem Ziel, umfassend die Schritte
- Bereitstellen von Graphdaten (431-433),
- Bereitstellen von Ranginformationsdaten (431-433) und
- Bestimmen einer optimalen Route von dem Startpunkt zu dem Ziel abhängig von den Graphdaten (431-433) und den Ranginformationsdaten (431-433),
**dadurch gekennzeichnet,**
**dass** die Ranginformationsdaten (431-433) so eingerichtet sind, dass eine Ranginformation für eine Kante des Graphen (93, 94; v; va-vh) die Relevanz der Kante des Graphen (93, 94; v; va-vh) für optimale Routen quantifiziert, die Kacheln (90-92; 311) einer Kachelung (80; 310) verbinden, wobei die Kachelung (80; 310) einen Bereich bedeckt, in dem der Graph enthalten ist,
wobei die Ranginformation für die Kante des Graphen (93, 94; v; va-vh) anzeigt, ob die Kante des Graphen (93, 94; v; va-vh) in einer optimalen Route enthalten ist, die eine in einer ersten Kachel gelegene Startkante aufweist, wobei die erste Kachel wenigstens einen vorgegebenen Kachelabstand von einer Kachel (90-92; 311) aufweist, die die Kante des Graphen (93, 94; va-vh) enthält.

18. Verfahren zum Bestimmen einer optimalen Route nach Anspruch 17,
**gekennzeichnet durch** den Schritt.
- Auswählen eines Teilsatzes von Kanten des Graphen (93, 94; v; va-vh) abhängig von der Ranginformation (r),
wobei der Schritt des Bestimmens einer optimalen Route abhängig von dem Teilsatz von Kanten des Graphen (93, 94; v; va-vh) durchgeführt wird.

19. Verfahren zum Bestimmen einer optimalen Route nach Anspruch 17 oder 18,
**gekennzeichnet durch** den Schritt:
- Definieren der Kachelung (80; 310; 510; 520), die den Bereich bedeckt, in dem die Kanten des Graphen (93, 94; v; va-vh) enthalten sind.

20. Verfahren zum Bestimmen einer optimalen Route nach Anspruch 19,
**dadurch gekennzeichnet, dass** die Kachelung (80; 310; 510; 520) derart definiert wird oder dass die Kanten des Graphen (93, 94; v; va-vh) derart umdefiniert werden, dass jede Kante des Graphen (93, 94; v; va-vh) in maximal einer Kachel (90-92; 311) der Kachelung (80; 310; 510; 520) enthalten ist.

21. Verfahren zum Bestimmen einer optimalen Route nach Anspruch 19 oder 20 und nach Anspruch 18,
**dadurch gekennzeichnet, dass** der Schritt des Auswählens eines Teilsatzes von Kanten des Graphen (93, 94; v; va-vh) die Schritte umfasst:
- Bestimmen einer Startkachel (S), die den Startpunkt enthält,
- Bestimmen einer Zielkachel (D), die das Ziel enthält, und
- Einfügen einer Kante des Graphen (93, 94; v; va-vh) in den Teilsatz von Kanten des Graphen abhängig von einer Ranginformation (r) der Kante des Graphen und einem Kachelabstand einer Kachel (90-92; 311), die die Kante des Graphen (93, 94; v; va-vh) enthält, von der Startkachel (S) oder der Zielkachel (D).

22. Verfahren zum Bestimmen einer optimalen Route nach einem der Ansprüche 19-21 und nach Anspruch 18,
**dadurch gekennzeichnet, dass** der Schritt des Auswählens eines Teilsatzes von Kanten des Graphen die Schritte umfasst:
- Bestimmen eines Start-Ziel-Kachelabstands von einer Startkachel (S), die den Startpunkt enthält, zu einer Zielkachel (D), die das Ziel enthält,
- Auswählen eines minimalen Rangwerts abhängig von dem Start-Ziel-Kachelabstand und
- Einfügen aller Kanten des Graphen mit einem Rangwert, der gleich dem minimalen Rangwert oder größer als der minimale Rangwert ist, in den Teilsatz von Kanten des Graphen.

23. Verfahren zum Bestimmen einer optimalen Route nach einem der Ansprüche 17-22,
**gekennzeichnet durch** den Schritt:
- Bereitstellen von Gewichtungsfaktoren für Graphkanten, wobei der Schritt des Bestimmens einer optimalen Route weiterhin von den Gewichtungsfaktoren abhängt.

24. Verfahren zum Bestimmen einer optimalen Route nach einem der Ansprüche 17-23,
**gekennzeichnet durch** die Schritte:
- Empfangen von Fahrzeugpositionsdaten und
- Bestimmen einer optimalen Route von der Fahrzeugposition zu dem Ziel.

25. Verfahren zum Bestimmen einer optimalen Route nach einem der Ansprüche 17-24,
**dadurch gekennzeichnet, dass** der Graph ein Straßennetz ist, wobei die Graphdaten Straßensegmentdaten sind, und wobei jede Kante des Graphen einem Straßensegment (93, 94; v; va-vh) des Straßennetzes entspricht.

26. System zum Vorverarbeiten von Graphdaten, umfassend
- eine erste Speichereinheit (10), die Graphdaten (11-13) enthält, welche einen Graphen (93, 94; v; va-vh) beschreiben,
- eine zweite Speichereinheit (20), die Kachelungsdefinitionsdaten (21-23) enthält, welche Kacheln zu den Kanten des Graphen in Bezug setzt,
- eine Arbeitsspeichereinheit (50) zum Speichern eines Teilsatzes der Graphdaten (11-13) und eines Teilsatzes der Kachelungsdefinitionsdaten (21-23) und
- eine Verarbeitungseinheit (40), die eingerichtet ist, um in der Arbeitsspeichereinheit (50) gespeicherte Daten zu verarbeiten,
**dadurch gekennzeichnet,**
**dass** die Verarbeitungseinheit (40) eingerichtet ist, um eine Ranginformation (r) einer Kante des Graphen (93, 94; v; va-vh) abhängig von der Kachelung (80; 310) zu bestimmen, so dass die Ranginformation (r) die Relevanz der Kante des Graphen (93; 94; v; va-vh) für optimale Routen quantifiziert, die Kacheln (90-92; 311) der Kachelung (80; 310) verbinden,
wobei das System zum Vorverarbeiten eingerichtet ist,
- um eine Kachel (90-92; 311) zu bestimmen, die die Kante des Graphen (93; 94; v; va-vh) enthält,
- um eine erste Kachel auszuwählen, die wenigstens einen vorgegebenen Kachelabstand von der Kachel (90-92; 311) aufweist, die die Kante des Graphen (93; 94; v; va-vh) enthält, und
- um zu bestimmen, ob die Kante des Graphen (93; 94; v; va-vh) in einer optimalen Route enthalten ist, die eine in der ersten Kachel gelegene Startkante aufweist.

27. System zum Vorverarbeiten von Graphdaten nach Anspruch 26,
**dadurch gekennzeichnet, dass** das System eingerichtet ist, um das Verfahren zum Vorverarbeiten von Graphdaten nach einem der Ansprüche 1-16 durchzuführen.

28. System zum Vorverarbeiten von Graphdaten nach Anspruch 26 oder 27,
**gekennzeichnet durch**
- eine weitere Arbeitsspeichereinheit (60), die mit der Verarbeitungseinheit (40) gekoppelt ist und die eingerichtet ist, um eine bestimmte Ranginformation (r) zu speichern.

29. System zum Vorverarbeiten von Graphdaten nach Anspruch 28,
**dadurch gekennzeichnet, dass** die Verarbeitungseinheit (40) eingerichtet ist, um in der zusätzlichen Arbeitsspeichereinheit (60) gespeicherte Daten zum Bestimmen der Ranginformation (r) zu verarbeiten.

30. System zum Vorverarbeiten von Graphdaten nach einem der Ansprüche 26-29,
**dadurch gekennzeichnet, dass** die Arbeitsspeichereinheit (50) eine Speicherkapazität aufweist, die ausreicht, um einen Teilsatz der Graphdaten (61, 62) zu speichern, der für eine Suche nach einer optimalen Route zum Bestimmen der Ranginformation (r) benötigt wird.

31. System zum Vorverarbeiten von Graphdaten nach einem der Ansprüche 26-30,
**gekennzeichnet durch**
- eine Ausgabeeinheit (70) zum Ausgeben einer bestimmten Ranginformation (r).

32. System zum Vorverarbeiten von Graphdaten nach einem der Ansprüche 26-31,
**gekennzeichnet durch**
- eine dritte Speichereinheit (30) zum Speichern einer bestimmten Ranginformation (r).

33. System zum Vorverarbeiten von Graphdaten nach einem der Ansprüche 26-32,
**dadurch gekennzeichnet, dass** das System wenigstens eine weitere Verarbeitungseinheit umfasst, die eingerichtet ist, um eine Ranginformation (r) einer Kante des Graphen (93; 94; v; va-vh) abhängig von der Kachelung (80; 310) zu bestimmen, wobei die Verarbeitungseinheit (40) und die weitere Verarbeitungseinheit eingerichtet sind, um die Ranginformation (r) von Kanten des Graphen (93; 94; v; va-vh) parallel zu bestimmen.

34. System zum Vorverarbeiten von Graphdaten nach einem der Ansprüche 26-33,
**dadurch gekennzeichnet, dass** der Graph ein Straßennetz ist, wobei die Graphdaten Straßensegmentdaten sind, und wobei jede Kante des Graphen einem Straßensegment (93; 94; v; va-vh) des Straßennetzes entspricht.

35. System zum Bestimmen einer optimalen Route, umfassend
- eine erste Speichereinheit (430), die Graphdaten (431-433) enthält,
- eine zweite Speichereinheit (430), die Ranginformationsdaten (431-433) enthält,
- eine Arbeitsspeichereinheit (460) zum Speichern eines Teilsatzes der Graphdaten (461, 462) und
- eine Verarbeitungseinheit (450), die mit der Arbeitsspeichereinheit (460) gekoppelt ist und die eingerichtet ist, um eine optimale Route von einem Startpunkt zu einem Ziel abhängig von Ranginformationsdaten (431-433) zu bestimmen, **dadurch gekennzeichnet,**
**dass** die Ranginformationsdaten (431-433) so eingerichtet sind, dass eine Ranginformation für eine Kante des Graphen (93; 94; v; va-vh) die Relevanz der Kante des Graphen (93; 94; v; va-vh) für optimale Routen quantifiziert, die Kacheln (90-92; 311) einer Kachelung (80; 310) verbinden, wobei die Kachelung (80; 310) einen Bereich bedeckt, in dem der Graph enthalten ist,
wobei die Ranginformation für die Kante des Graphen (93; 94; v; va-vh) anzeigt, ob die Kante des Graphen (93; 94; v; va-vh) in einer optimalen Route enthalten ist, die eine Startkante aufweist, welche in einer ersten Kachel mit wenigstens einem vorgegebenen Kachelabstand von einer Kachel (90-92; 311) liegt, die die Kante des Graphen (93; 94; v; va-vh) enthält.

36. System zum Bestimmen einer optimalen Route nach Anspruch 35,
**gekennzeichnet durch**
- eine zusätzliche Verarbeitungseinheit (450), die eingerichtet ist, um abhängig von den Ranginformationsdaten (431-433) Graphdaten (461, 462) oder Ranginformationsdaten (431-433) den in der Arbeitsspeichereinheit (460) gespeicherten Daten hinzuzufügen oder sie aus diesen zu entfernen.

37. System zum Bestimmen einer optimalen Route nach Anspruch 35 oder 36,
**gekennzeichnet durch**
- eine dritte Speichereinheit (440), die Kachelungsdefinitionsdaten (441-443) enthält.

38. System zum Bestimmen einer optimalen Route nach einem der Ansprüche 35-37,
**dadurch gekennzeichnet,**
**dass** die Arbeitsspeichereinheit (450) eine Speicherkapazität aufweist, die ausreicht, um einen Teilsatz der Graphdaten (461, 462) zu speichern, der zum Bestimmen der optimalen Route benötigt wird.

39. System zum Bestimmen einer optimalen Route nach einem der Ansprüche 35-38,
**dadurch gekennzeichnet, dass** das System eingerichtet ist, um das Verfahren zum Bestimmen einer optimalen Route nach einem der Ansprüche 17-25 durchzuführen.

40. System zum Bestimmen einer optimalen Route nach einem der Ansprüche 35-39,
**dadurch gekennzeichnet, dass** der Graph ein Straßennetz ist, wobei die Graphdaten Straßensegmentdaten sind, und wobei jede Kante des Graphen einem Straßensegment (93, 94; v; va-vh) des Straßennetzes entspricht.

41. Navigationssystem, **gekennzeichnet durch**
- ein System zum Bestimmen einer optimalen Route (420) nach einem der Ansprüche 35-40.

42. Navigationssystem nach Anspruch 41,
**gekennzeichnet durch**
- ein Positionsbestimmungsmittel (412), das eingerichtet ist, um an das System zum Bestimmen einer optimalen Route (420) Fahrzeugpositionsdaten bereitzustellen.

## Revendications

1. Procédé de prétraitement de données de graphe pour une détermination de route optimale, comprenant les étapes de
- fournir lesdites données de graphe (11-13), et
- définir un pavage (80; 130) couvrant une zone contenant ledit graphe,
**caractérisé par** l'étape de
- déterminer une information de rang (r) pour une arête dudit graphe (93, 94; V; va-vh), de sorte que l'information de rang (r) quantifie la pertinence de ladite arête dudit graphe (93, 94; v; va-vh) pour des routes optimales reliant des tuiles (90-92; 311) dudit pavage (80; 310),
dans lequel le pavage (80; 310) est défini de telle sorte, ou les arêtes (93, 94; v; va-vh) dudit graphe sont redéfinies de telle sorte, que chacune desdites arêtes (93, 94; v; va-vh) soit contenue dans au plus une tuile (90-92; 311) dudit pavage (80; 310), et
l'étape de déterminer l'information de rang (r) pour une arête dudit graphe (93, 94; V; va-vh) comprend les étapes de
- déterminer une tuile (90-92; 311) contenant ladite arête dudit graphe (93, 94; v; va-vh),
- sélectionner une première tuile ayant au moins un écart de tuile donné de ladite tuile (90-92; 311) contenant ladite arête dudit graphe (93, 94; v; va-vh), et
- déterminer si ladite arête dudit graphe (93, 94; v; va-vh) est contenue dans une route optimale ayant une arête de départ localisée dans ladite première tuile.

2. Procédé de prétraitement de données de graphe selon la revendication 1, **caractérisé en ce que** l'information de rang (r) quantifie la pertinence de ladite arête dudit graphe (93, 94; v; va-vh) pour des routes optimales reliant des points localisés sur des arêtes de tuile.

3. Procédé de prétraitement de données de graphe selon la revendication 1 ou 2, **caractérisé en ce qu'**un noeud de ladite arête de départ est localisé sur une arête de ladite première tuile.

4. Procédé de prétraitement de données de graphe selon l'une quelconque des revendications 1-3, **caractérisé en ce que** l'étape de déterminer l'information de rang (r) comprend en outre l'étape de
- sélectionner une deuxième tuile ayant au moins ledit écart de tuile de ladite tuile (90-92; 311) contenant ladite arête dudit graphe (93, 94; Vi va-vh), une arête de destination de ladite route optimale étant localisée dans ladite deuxième tuile.

5. Procédé de prétraitement de données de graphe selon la revendication 4, **caractérisé en ce qu'**un noeud de ladite arête de destination est localisé sur une arête de ladite deuxième tuile.

6. Procédé de prétraitement de données de graphe selon l'une quelconque des revendications 1-5, **caractérisé en ce que** l'étape de déterminer l'information de rang (r) comprend en outre l'étape de
- déterminer un maximum dudit écart de tuile pour lequel ladite arête dudit graphe (93, 94i v; va-vh) est contenue dans une route optimale.

7. Procédé de prétraitement de données de graphe selon l'une quelconque des revendications 1-6, **caractérisé en ce que** l'étape de déterminer l'information de rang (r) est effectuée de manière récurrente pour des valeurs croissantes dudit écart de tuile.

8. Procédé de prétraitement de données de graphe selon l'une quelconque des revendications 1-7, **caractérisé en ce que**, pour une valeur donnée dudit écart de tuile, une recherche de route optimale est effectuée sur un sous-ensemble d'arêtes dudit graphe (93, 94; v; va-vh) sélectionnées à base de résultats obtenus pour des valeurs inférieures dudit écart de tuile donné.

9. Procédé de prétraitement de données de graphe selon l'une quelconque des revendications précédentes, **caractérisé par** l'étape de
- fournir des facteurs de pondération d'arête de graphe, dans lequel l'étape de déterminer l'information de rang (r) se base en outre sur lesdits facteurs de pondération.

10. Procédé de prétraitement de données de graphe selon l'une quelconque des revendications précédentes, **caractérisé en ce que** l'étape de déterminer l'information de rang (r) est effectuée pour chacune desdites arêtes dudit graphe (93, 94; v; va-vh).

11. Procédé de prétraitement de données de graphe selon l'une quelconque des revendications précédentes, **caractérisé en ce que** les tuiles (90-92; 311) dudit pavage (80; 130) ont une forme rectangulaire.

12. Procédé de prétraitement de données de graphe selon l'une quelconque des revendications précédentes, **caractérisé en ce qu'**un écart de tuile entre deux tuiles (90-92; 311) est défini comme étant le nombre minimal d'arêtes de tuile ou de noeuds de tuile traversés sur un chemin reliant lesdites deux tuiles (90-92; 311).

13. Procédé de prétraitement de données de graphe selon l'une quelconque des revendications précédentes, **caractérisé par** l'étape de
- inter-combiner une séquence d'arêtes de graphe contenue dans une tuile (90-92; 311) pour constituer une nouvelle arête de graphe.

14. Procédé de prétraitement de données de graphe selon l'une quelconque des revendications précédentes, **caractérisé par** l'étape de
- grossir le pavage après avoir déterminé une information de rang (r) d'arête de graphe prédéterminée.

15. Procédé de prétraitement de données de graphe selon l'une quelconque des revendications précédentes, **caractérisé par** l'étape de
- émettre l'information de rang déterminée (r).

16. Procédé de prétraitement de données de graphe selon l'une quelconque des revendications précédentes, **caractérisé en ce que** le graphe est un réseau routier, les données de graphe étant des données de segment de route, et chaque arête dudit graphe correspond à un segment de route (93, 94; V; va-vh) dudit réseau routier.

17. Procédé de détermination de route optimale à partir d'un point de départ vers une destination, comprenant les étapes de
- fournir des données de graphe (431-433),
- fournir des données d'information de rang (431-433), et
- déterminer une route optimale à partir du point de départ vers la destination à base desdites données de graphe (431-433) et desdites données d'information de rang (431-433),
**caractérisé en ce que**
lesdites données d'information de rang (431-433) sont configurées de sorte qu'une information de rang pour une arête dudit graphe (93, 94; v; va-vh) quantifie la pertinence de ladite arête dudit graphe (93, 94; v; va-vh) pour des routes optimales reliant des tuiles (90-92; 311) d'un pavage (80; 310), le pavage (80; 310) couvrant une zone contenant ledit graphe,
ladite information de rang pour ladite arête dudit graphe (93, 94; v; va-vh) indique si ladite arête dudit graphe (93, 94; v; va-vh) est contenue dans une route optimale ayant une arête de départ localisée dans une première tuile ayant au moins un écart de tuile donné d'une tuile (90-92; 311) contenant ladite arête dudit graphe (93, 94; v; va-vh).

18. Procédé de détermination de route optimale selon la revendication 17, **caractérisé par** l'étape de
- sélectionner un sous-ensemble d'arêtes dudit graphe (93, 94; v; va-vh) à base de ladite information de rang (r),
l'étape de déterminer une route optimale étant effectuée à base dudit sous-ensemble d'arêtes dudit graphe (93, 94; v; va-vh).

19. Procédé de détermination de route optimale selon la revendication 17 ou 18, **caractérisé par** l'étape de
- définir ledit pavage (80; 310; 510; 520) couvrant ladite zone dans laquelle sont contenues lesdites arêtes dudit graphe (93, 94; v; va-vh).

20. Procédé de détermination de route optimale selon la revendication 19, **caractérisé en ce que** le pavage (80; 310; 510; 520) est défini de telle sorte, ou les arêtes dudit graphe (93, 94; v; va-vh) sont redéfinies de telle sorte, que chacune desdites arêtes dudit graphe (93, 94; Vi va-vh) soit contenue à l'intérieur d'au plus une tuile (90-92; 311) dudit pavage (80; 310; 510; 520).

21. Procédé de détermination de route optimale selon la revendication 19 ou 20 et la revendication 18, **caractérisé en ce que** l'étape de sélectionner un sous-ensemble d'arêtes dudit graphe (93, 94; v; va-vh) comprend les étapes de
- déterminer une tuile de départ (S) contenant ledit point de départ,
- déterminer une tuile de destination (D) contenant ladite destination, et
- inclure une arête dudit graphe (93, 94; v; va-vh) dans ledit sous-ensemble d'arêtes dudit graphe à base d'une information de rang (r) de ladite arête dudit graphe et d'un écart de tuile d'une tuile (90-92; 311) contenant ladite arête dudit graphe (93, 94; v; va-vh) à partir de la tuile de départ (S) ou de la tuile de destination (D).

22. Procédé de détermination de route optimale selon l'une quelconque des revendications 19-21 et la revendication 18, **caractérisé en ce que** l'étape de sélectionner un sous-ensemble d'arêtes dudit graphe comprend les étapes de
- déterminer un écart de tuile départ-destination à partir d'une tuile de départ (S) contenant ledit point de départ vers une tuile de destination (D) contenant ladite destination,
- sélectionner une valeur de rang minimale à base dudit écart de tuile départ-destination, et
- inclure toutes les arêtes dudit graphe ayant une valeur de rang égale ou supérieure à ladite valeur de rang minimale dans ledit sous-ensemble d'arêtes dudit graphe.

23. Procédé de détermination de route optimale selon l'une quelconque des revendications 17-22, **caractérisé par** l'étape de
- fournir des facteurs de pondération d'arête de graphe, dans lequel l'étape de déterminer une route optimale est en outre basée sur lesdits facteurs de pondération.

24. Procédé de détermination de route optimale selon l'une quelconque des revendications 17-23, **caractérisé par** les étapes de
- recevoir des données de position de véhicule, et
- déterminer une route optimale à partir de la position du véhicule vers la destination.

25. Procédé de détermination de route optimale selon l'une quelconque des revendications 17-24, **caractérisé en ce que** le graphe est un réseau routier, les données de graphe étant des données de segment de route, et chaque arête dudit graphe correspond à un segment de route (93, 94; v; va-vh) dudit réseau routier.

26. Système de prétraitement de données de graphe, comprenant
- une première mémoire (10) contenant des données de graphe (11-13) décrivant un graphe (93, 94; v; va-vh),
- une deuxième mémoire (20) contenant des données de définition de pavage (21-23) reliant des tuiles aux arêtes dudit graphe,
- une mémoire de travail (50) pour stocker un sous-ensemble desdites données de graphe (11-13) et un sous-ensemble desdites données de définition de pavage (21-23), et
- une unité de traitement (40) apte à traiter des données stockées dans la mémoire de travail (50),
**caractérisé en ce que**
l'unité de traitement (40) est apte à déterminer une information de rang (r) d'une arête dudit graphe (93, 94; v; va-vh) à base dudit pavage (80; 310) de sorte que l'information de rang (r) quantifie la pertinence de ladite arête dudit graphe (93; 94; v; va-vh) pour des routes optimales reliant des tuiles (90-92; 311) dudit pavage (80; 310),
dans lequel le système de prétraitement est apte à
- déterminer une tuile (90-92; 311) contenant ladite arête dudit graphe (93, 94; v; va-vh),
- sélectionner une première tuile ayant au moins un écart de tuile donné de ladite tuile (90-92, 311) contenant ladite arête dudit graphe (93, 94; v; va-vh), et
- déterminer si ladite arête dudit graphe (93, 94; v; va-vh) est contenue dans une route optimale ayant une arête de départ localisée dans ladite première tuile.

27. Système de prétraitement de données de graphe selon la revendication 26, **caractérisé en ce que** le système est apte à exécuter le procédé de prétraitement de données de graphe selon l'une quelconque des revendications 1-16.

28. Système de prétraitement de données de graphe selon la revendication 26 ou 27, **caractérisé par**
- une mémoire de travail supplémentaire (60) couplée à ladite unité de traitement (40) et apte à stocker une information de rang déterminée (r).

29. Système de prétraitement de données de graphe selon la revendication 28, **caractérisé en ce que** l'unité de traitement (40) est apte à traiter des données stockées dans la mémoire de travail (60) supplémentaire pour déterminer l'information de rang (r).

30. Système de prétraitement de données de graphe selon l'une quelconque des revendications 26-29, **caractérisé en ce que** la mémoire de travail (50) a une capacité de stockage suffisante pour stocker un sous-ensemble desdites données de graphe (61, 62) requises pour une recherche de route optimale afin de déterminer l'information de rang (r).

31. Système de prétraitement de données de graphe selon l'une quelconque des revendications 26-30, **caractérisé par**
- une unité d'émission (70) pour émettre une information de rang déterminée (r).

32. Système de prétraitement de données de graphe selon l'une quelconque des revendications 26-31, **caractérisé par**
- une troisième mémoire (30) pour stocker une information de rang déterminée (r).

33. Système de prétraitement de données de graphe selon l'une quelconque des revendications 26-32, **caractérisé en ce que** le système comprend au moins une unité de traitement supplémentaire apte à déterminer une information de rang (r) d'une arête dudit graphe (93, 94; v; va-vh) à base dudit pavage (80; 310),
dans lequel l'unité de traitement (40) et l'unité de traitement supplémentaire sont aptes à déterminer parallèlement une information de rang (r) d'arêtes dudit graphe (93, 94; v; va-vh).

34. Système de prétraitement de données de graphe selon l'une quelconque des revendications 26-33, **caractérisé en ce que** le graphe est un réseau routier, les données de graphe étant des données de segment de route, et chaque arête dudit graphe correspond à un segment de route (93, 94; v; va-vh) dudit réseau routier.

35. Système de détermination de route optimale, comprenant
- une première mémoire (430) contenant des données de graphe (431-433),
- une deuxième mémoire (430) contenant des données d'information de rang (431-433),
- une mémoire de travail (460) pour stocker un sous-ensemble desdites données de graphe (461, 462), et
- une unité de traitement (450) couplée à ladite mémoire de travail (460) et apte à déterminer une route optimale à partir d'un point de départ vers une destination à base de données d'information de rang (431-133),
**caractérisé en ce que**
lesdites données d'information de rang (431-433) sont configurées de sorte qu'une information de rang pour une arête dudit graphe (93, 94; v; va-vh) quantifie la pertinence de ladite arête dudit graphe (93, 94; v; va-vh) pour des routes optimales reliant des tuiles (90-92; 311) d'un pavage (80; 310), le pavage (80; 310) couvrant une zone contenant ledit graphe,
ladite information de rang pour ladite arête dudit graphe (93, 94; v; va-vh) indiquant si ladite arête dudit graphe (93, 94; v; va-vh) est contenue dans une route optimale ayant une arête de départ localisée dans une première tuile ayant au moins un écart de tuile donné d'une tuile (90-92; 311) contenant ladite arête dudit graphe (93, 94; v; va-vh).

36. Système de détermination de route optimale selon la revendication 35, **caractérisé par**
- une unité de traitement supplémentaire (450) apte à inclure des données de graphe (461, 462) ou des données d'information de rang (431-433) dans les données stockées dans la mémoire de travail (460) ou pour les en extraire à base desdites données d'information de rang (431-433).

37. Système de détermination de route optimale selon la revendication 35 ou 36, **caractérisé par**
- une troisième mémoire (440) contenant des données de définition de pavage (441-443).

38. Système de détermination de route optimale selon l'une quelconque des revendications 35-37, **caractérisé en ce que** ladite mémoire de travail (450) a une capacité de stockage suffisante pour stocker un sous-ensemble desdites données de graphe (461, 462) requises pour une détermination de route optimale.

39. Système de détermination de route optimale selon l'une quelconque des revendications 35-38, **caractérisé en ce que** le système est apte à exécuter le procédé de détermination de route optimale selon l'une quelconque des revendications 17-25.

40. Système de détermination de route optimale selon l'une quelconque des revendications 35-39, **caractérisé en ce que** le graphe est un réseau routier, les données de graphe étant des données de segment de route, et chaque arête dudit graphe correspond à un segment de route (93, 94; v; va-vh) dudit réseau routier.

41. Système de navigation, **caractérisé par**
- un système de détermination de route optimale (420) selon l'une quelconque des revendications 35-40.

42. Système de navigation selon la revendication 41, **caractérisé par**
- un moyen de détermination de position (412) apte à fournir des données de position de véhicule audit système pour une détermination de route optimale (420).
